(19) Europäisches Patentamt
European Patent Office
Office européen des brevets

(11) **EP 4 115 508 B1**

(12) **EUROPÄISCHE PATENTSCHRIFT**

(45) Veröffentlichungstag und Bekanntmachung des Hinweises auf die Patenterteilung:
**23.08.2023   Patentblatt 2023/34**

(21) Anmeldenummer: **21710218.5**

(22) Anmeldetag: **03.03.2021**

(51) Internationale Patentklassifikation (IPC):
*H02K 41/02* [(2006.01)]      *H02K 16/02* [(2006.01)]
*B65G 54/02* [(2006.01)]

(52) Gemeinsame Patentklassifikation (CPC):
**H02K 41/02; B65G 54/02; H02K 16/02;**
H02K 2201/18

(86) Internationale Anmeldenummer:
**PCT/EP2021/055246**

(87) Internationale Veröffentlichungsnummer:
**WO 2021/175882 (10.09.2021 Gazette 2021/36)**

(54) **TRANSPORTEINRICHTUNG**

TRANSPORT DEVICE

DISPOSITIF DE TRANSPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2020   AT 501692020**

(43) Veröffentlichungstag der Anmeldung:
**11.01.2023   Patentblatt 2023/02**

(73) Patentinhaber: **B&R Industrial Automation GmbH 5142 Eggelsberg (AT)**

(72) Erfinder:
• **HAUER, Michael**
**5142 Eggelsberg (AT)**
• **FLIXEDER, Stefan**
**5142 Eggelsberg (AT)**

(74) Vertreter: **Patentanwälte Pinter & Weiss OG Prinz-Eugen-Straße 70 1040 Wien (AT)**

(56) Entgegenhaltungen:
WO-A1-2005/019069      WO-A1-2018/176137
WO-A1-2019/145406      DE-A1-102009 002 612

## Beschreibung

Die Erfindung betrifft eine Transporteinrichtung in Form eines Planarmotors mit zumindest einem Transportsegment, das eine Transportebene ausbildet und mit zumindest zwei Transporteinheiten, die in der Transportebene zumindest zweidimensional bewegbar sind, wobei am Transportsegment Antriebsspulen oder bewegliche Permanentmagnete angeordnet sind und an den Transporteinheiten Antriebsmagnete angeordnet sind oder umgekehrt, wobei die Antriebsspulen oder die beweglichen Permanentmagnete mit den Antriebsmagneten magnetisch zusammenwirken, um die Transporteinheiten zu bewegen, wobei an den zumindest zwei Transporteinheiten jeweils zumindest ein Eingriffsabschnitt vorgesehen ist, wobei die zumindest zwei Transporteinheiten in der Transportebene in einer Bewegungsrichtung hintereinander in eine Eingriffsposition bewegbar sind, in der die Eingriffsabschnitte der Transporteinheiten zumindest teilweise in Eingriff sind, wobei die Eingriffsabschnitte dazu ausgebildet sind, sich in der Eingriffsposition zumindest in Bewegungsrichtung derart zu überlappen, dass eine Gesamterstreckung der Transporteinheiten in Bewegungsrichtung geringer ist, als eine Summe der einzelnen Transporteinheitserstreckungen der Transporteinheiten in Bewegungsrichtung. Weiters betrifft die Erfindung eine Transporteinheit für eine Transporteinrichtung in Form eines Planarmotors sowie ein Verfahren zum Betreiben einer solchen Transporteinrichtung.

Planarmotoren sind grundsätzlich im Stand der Technik bekannt. Ein Planarmotor weist im Wesentlichen eine, üblicherweise von einem oder mehreren Transportsegmenten ausgebildete Transportebene auf, in der eine oder mehrere Transporteinheiten zumindest zweidimensional bewegt werden können. Eine auf die Transporteinheiten wirkende Antriebskraft wird durch ein Zusammenwirken der Magnetfelder der Transportsegmente und der Transporteinheiten erzeugt. Um eine Bewegung der Transporteinheit in eine bestimmte Bewegungsrichtung zu bewirken, muss zumindest eines der Magnetfelder, also jenes des Transportsegments und/oder der Transporteinheit, zeitlich veränderlich sein, um der Bewegung der Transporteinheit zu folgen. Meist ist jedoch nur ein Magnetfeld, in der Regel jenes am Transportsegment zeitlich veränderlich und das jeweils andere Magnetfeld, in der Regel das an den Transporteinheiten, ist üblicherweise konstant. Die US 9,202,719 B2 offenbart beispielsweise den grundlegenden Aufbau und die Funktionsweise eines solchen Planarmotors.

Zeitlich veränderliche Magnetfelder können beispielweise durch Spulen (Elektromagnete) oder bewegte (z.B. rotierende) Permanentmagnete erzeugt werden, die sowohl an der Transporteinheit als auch am Transportsegment angeordnet sein können. Die Spulen werden häufig auch als Antriebsspulen bezeichnet. Zeitlich unveränderliche, also konstante, Magnetfelder werden typischerweise mit Hilfe von Permanentmagneten erzeugt. Häufig werden diese Komponenten als Antriebsmagnete bezeichnet. Auch diese können, je nach Ausführungsform des Planarmotors, sowohl an der Transporteinheit als auch am Transportsegment angeordnet sein. Aufgrund der einfacheren Ansteuerung sind die Antriebsspulen oftmals am Transportsegment des Planarmotors angeordnet und die Antriebsmagnete sind an der Transporteinheit angeordnet.

Die Antriebsspulen werden in der Regel von einer Steuerungseinheit angesteuert, um ein bewegtes Magnetfeld in die gewünschte Bewegungsrichtung zu erzeugen. An der Transporteinheit sind Antriebsmagnete zumindest zweidimensional verteilt angeordnet, die mit dem bewegten Magnetfeld zusammenwirken, sodass vorgegebene Kräfte und Momente auf die Transporteinheit in Richtung der Bewegungsfreiheitsgrade der Transporteinheit (maximal drei translatorische Bewegungsfreiheitsgrade und drei rotatorische Bewegungsfreiheitsgrade) beliebig ausgeübt werden können. Jene Kräfte und Momente, welche eine Bewegung der Transporteinheit in die Richtung eines der Bewegungsfreiheitsgrade bewirken, werden üblicherweise als Antriebskräfte bezeichnet. Jene Kräfte und Momente welche vom Transportsegment auf die Transporteinheit ausgeübt werden, welche der Aufrechterhaltung des aktuellen Bewegungszustands dienen, werden üblicherweise als Schwebekräfte bezeichnet. Durch die Schwebekraft kann beispielsweise ein Luftspalt zwischen der Transporteinheit und den Transportsegmenten erzeugt und aufrechterhalten und/oder Prozesskräfte bzw. -momente kompensiert werden. Auch bei einer nicht horizontal ausgerichteten Transportebene kann beispielsweise die Position der Transporteinheit durch eine entsprechende Schwebekraft konstant gehalten werden.

Um die für den Planarmotor charakteristische zweidimensionale Bewegung der Transporteinheit zu ermöglichen, bedarf es einem zweidimensionalen Zusammenwirken der Magnetfelder der Transportsegmente und Transporteinheiten, wobei eines der beiden Magnetfelder in zumindest zwei Dimensionen oder beide Magnetfelder in zumindest einer Dimension zeitlich veränderlich sein müssen. Die Antriebsspulen und die Antriebsmagnete sind dabei vorteilhafterweise so angeordnet, dass neben einer eindimensionalen Bewegung entlang der von der Transportebene aufgespannten Achsen auch komplexere zweidimensionale Bewegungen der Transporteinheit in der Transportebene möglich sind. Wenn die Antriebsspulen und die Antriebsmagnete vorteilhafterweise so angeordnet sind, dass die Transporteinheit in Richtung aller sechs Freiheitsgrade mit Hilfe der Antriebs- und Schwebekräfte geführt und bewegt werden kann, kann eine mechanische Führung entfallen. Man spricht in diesem Fall häufig von einem lagerlosen Planarmotor.

Ein Planarmotor kann beispielsweise als Transporteinrichtung in einem Produktionsprozess genutzt werden, wobei sehr flexible Transportprozesse mit komplexen Bewegungsprofilen realisiert werden können. In der EP 3 172 156 B1 und der EP 3 172 134 B1 sind beispielsweise solche Anwendungen eines Planarmotors als Transporteinrichtung gezeigt.

Die WO 2018/176137 A1 offenbart eine Transporteinrichtung in Form eines Planarmotors, bei der Transporteinheiten mittels relativ komplexer mechanischer Konstruktionen fest miteinander verbunden sind. Die mechanische Konstruktion dient als eine Art Manipulationsvorrichtung. Durch eine Relativbewegung der Transporteinheiten wird die Manipulationsvorrichtung betätigt, beispielsweise um eine vertikale Hebebewegung auszuführen. Die Relativbewegung der miteinander verbundenen Transporteinheiten ist durch die mechanische Verbindung eingeschränkt, sodass diese nicht mehr individuell bewegt werden können.

DE 10 2009 002612 A1 offenbart eine Transporteinrichtung in Form eines Langstatorlinearmotors mit einer Transportstrecke, die gerade Abschnitte und Kurvenabschnitte aufweist und mit Transporteinheiten, die entlang der Transportstrecke bewegt werden können. An der Transportstrecke sind gekrümmte Antriebsspulen angeordnet und an den Transporteinheiten sind gekrümmte Antriebsmagnete angeordnet.

Bei den bisher bekannten Planarmotoren können die Transporteinheiten in allen sechs Bewegungsfreiheitsgraden bewegt werden (Translationen in drei Raumachsen, sowie Drehungen um die drei Raumachsen). Dabei werden üblicherweise zwei Freiheitsgrade (Translation in der Transportebene) als Hauptbewegungsrichtungen verwendet, welche eine im Wesentlichen uneingeschränkte Bewegung erlauben. Die restlichen vier Bewegungsrichtungen sind nur eingeschränkt (bis zu einer gewissen Auslenkung) möglich. Die zwei Hauptbewegungsrichtungen werden bei bisherigen Planarmotoren als gleichwertig betrachtet, weil die Bewegung der Transporteinheiten in beiden Hauptbewegungsrichtungen als gleich wichtig angesehen wird. Dieser Umstand spiegelt sich auch im Design der Transporteinheiten wider. Bekannte Planarmotoren verwenden daher meist gleich große quaderförmige Shuttles, deren Grundflächen quadratisch bzw. rechteckförmig sind. Die transportierten Objekte werden dabei vorzugsweise im oder nahe dem geometrischen Schwerpunkt der Transporteinheiten angeordnet, um bei der Bewegung möglichst wenig störende dynamische Kräfte und Momente auf die Transporteinheit auszuüben.

Beim Transport von Objekten im Rahmen von Produktionsprozessen gibt es aber in der Regel eine vorgegebene Haupt-Prozessflussrichtung, in der die transportierten Objekte bewegt werden. Beispielsweise werden Objekte zwischen Arbeitsstationen bewegt, in denen bestimmte Prozessschritte an dem transportierten Objekt durchgeführt werden. Diese Haupt-Prozessflussrichtung wird daher meist als höherrangig angesehen. Daneben kann es untergeordnete Neben-Prozessflussrichtungen geben, beispielsweise eine Bewegung von Objekten innerhalb einer Arbeitsstation oder ein Ausschleusen von schadhaften Objekten aus der Haupt-Prozessflussrichtung, beispielsweise quer dazu.

Beim Transport von Objekten im Rahmen von Produktionsprozessen ist es in der Regel erwünscht, dass zumindest abschnittsweise ein möglichst großer Durchsatz an transportierten Objekten in der Haupt-Prozessflussrichtung erreicht werden kann. Diese Anforderung kann auch nur temporär (in einem bestimmten Prozessabschnitt, z.B. Bearbeitungsstation, Abschnitt mit geringerer Geschwindigkeit) sein. Um den Durchsatz des Transportprozesses zu steigern, ist daher ein möglichst geringer Abstand zweier transportierter Objekte in der Produktflussrichtung erwünscht. Mit dem bisherigen quadratischen Design der Transporteinheiten ist man dahingehend aber beschränkt, weil der minimale Abstand zwischen zwei Objekten (bei Anordnung jeweils im Mittelpunkt) im Wesentlichen der Seitenlänge der quadratischen Transporteinheit entspricht, wenn die Transporteinheiten direkt aneinander angrenzen.

Durch Transporteinheiten mit rechteckiger Grundfläche, die in Bewegungsrichtung gesehen eine geringere Länge aufweisen, als in Querrichtung lässt sich der Objektabstand im Vergleich zu quadratischen Transporteinheiten grundsätzlich zwar verringern. Allerdings ist man hierbei in der Verringerung des Objektabstandes eingeschränkt, weil eine gewisse Mindestlänge der Transporteinheit nicht unterschritten werden kann bzw. soll. Der Grund dafür ist, dass insbesondere bei dynamischen Bewegungsabläufen (z.B. bei großen Beschleunigungen oder Verzögerungen in Bewegungsrichtung) verbunden mit einem hohen Schwerpunktabstand des Schwerpunkts der Transporteinheit in Hochrichtung (insbesondere inkl. eines damit transportierten Objekts) relativ große Nickmomente resultieren, die von der Transporteinheit aufgenommen werden müssen. Um ein Kippen der Transporteinheit zu verhindern, müssen deshalb entsprechende, diesen Nickmomenten entgegengerichtete Gegenmomente durch den Planarmotor erzeugt werden. Zur Erzeugung dieser Gegenmomente ist daher ein gewisser Hebelabstand vom Schwerpunkt in Bewegungsrichtung erforderlich, weshalb eine gewisse Mindestlänge notwendig ist.

Es ist deshalb eine Aufgabe der Erfindung, bei einer Transporteinrichtung in Form eines Planarmotors den Durchsatz von transportierten Objekten auf einfache Weise zumindest temporär zu erhöhen, ohne die Bewegung der Transporteinheiten negativ zu beeinflussen.

Erfindungsgemäß wird die Aufgabe dadurch gelöst, dass an zumindest einer der zumindest zwei Transporteinheiten zumindest zwei Eingriffsabschnitte vorgesehen sind, wobei die Eingriffsabschnitte an gegenüberliegenden Seiten der jeweiligen Transporteinheit angeordnet sind und dass die Transporteinheiten in der Transportebene unabhängig voneinander bewegbar sind. Dadurch können die Transporteinheiten im Wesentlichen ineinander bewegt werden, sodass bei gleicher Ausdehnung wie bei bisher bekannten Transporteinheiten der Abstand zweier darauf transportierter Objekte verringert werden kann. Insbesondere bei Verwendung mehrerer Transporteinheiten mit Eingriffsabschnitten in einer Eingriffsposition kann dadurch der Durchsatz zumindest abschnittsweise gegenüber herkömmlichen Transporteinheiten erhöht werden. Durch die Eingriffsabschnitte an gegenüberliegenden Seiten kann die Flexibilität erhöht werden, weil mehrere Transporteinheiten hintereinander in eine Eingriffsposition gebracht werden können.

Die Eingriffsabschnitte können auch dazu ausgebildet sein, sich in der Eingriffsposition in einer normal auf die Transportebene stehenden Richtung zu überlappen. Dadurch können beispielsweise auch Transporteinheiten mit rechteckiger Grundfläche verwendet werden, deren Eingriffsabschnitte teilweise übereinander liegen.

Vorzugsweise sind die Eingriffsabschnitte der Transporteinheiten komplementär ausgebildet. Dadurch ergänzen sich die Formen gegenseitig und die Transporteinheiten können in der Eingriffsposition sehr nahe aneinander und im Wesentlichen formschlüssig positioniert werden.

Die zumindest zwei Eingriffsabschnitte der zumindest einen Transporteinheit können gleichartig oder komplementär ausgebildet sein. Komplementäre Eingriffsabschnitte an gegenüberliegenden Seiten sind vorteilhaft, um mehrere identisch ausgeführte Transporteinheiten hintereinander in eine Eingriffsposition zu bringen.

Die zumindest zwei Transporteinheiten weisen vorzugsweise jeweils eine auf die Transportebene projizierte Grundfläche mit einer, die Grundfläche minimal umgebenden Rechtecksfläche auf, wobei sich die minimal umgebenden Rechtecksflächen der zumindest zwei Transporteinheiten in der Eingriffsposition überschneiden. Vorzugsweise beträgt ein Verhältnis zwischen der minimal umgebenden Rechtecksfläche und der Grundfläche jeweils einer Transporteinheit maximal zwei, vorzugsweise maximal 1,5 und vorzugsweise minimal 1,1. Dadurch kann gewährleistet werden, dass eine ausreichend große Fläche zur Anordnung der Antriebsmagnete zur Verfügung steht und trotzdem ein ausreichend großer Eingriffsabschnitt gebildet werden kann.

Die Aufgabe wird weiters durch eine Transporteinheit dadurch gelöst, dass an der Transporteinheit zumindest zwei Eingriffsabschnitte vorgesehen sind, wobei die Eingriffsabschnitte an gegenüberliegenden Seiten der Transporteinheit angeordnet sind und dass die Transporteinheit außerhalb der Eingriffsposition unabhängig von der jeweils anderen Transporteinheit in der Transportebene der Transporteinrichtung zumindest zweidimensional bewegbar ist.

Die erfindungsgemäße Transporteinrichtung wird vorzugsweise betrieben, indem die zumindest zwei Transporteinheiten in der Transportebene in einer Bewegungsrichtung so hintereinander bewegt werden, dass sie sich zumindest in Bewegungsrichtung derart überlappen, dass eine Gesamterstreckung der Transporteinheiten in Bewegungsrichtung geringer ist, als eine Summe der einzelnen Transporteinheitserstreckungen der Transporteinheiten in

Bewegungsrichtung. Durch dieses Verfahren können auch herkömmliche Transporteinheiten mit quadratischer Grundfläche in vorteilhafter Weise in der Transportebene bewegt werden, um den Durchsatz von Objekten zumindest abschnittsweise zu erhöhen.

Vorteilhafterweise werden zumindest drei Transporteinheiten in der Transportebene in der Bewegungsrichtung so hintereinander bewegt, dass sich jeweils zwei aufeinanderfolgende Transporteinheiten zumindest in Bewegungsrichtung derart überlappen, dass eine Gesamterstreckung der Transporteinheiten in Bewegungsrichtung geringer ist, als eine Summe der einzelnen Transporteinheitserstreckungen der Transporteinheiten in Bewegungsrichtung, wobei mit jeder der zumindest drei Transporteinheiten ein Objekt transportiert wird, wobei die Objekte derart auf den Transporteinheiten positioniert werden, dass ein mittlerer Objektabstand zwischen den Objekten in Bewegungsrichtung maximal der mittleren Transporteinheitserstreckung der zumindest drei Transporteinheiten in Bewegungsrichtung entspricht, vorzugsweise maximal zwei Drittel der mittleren Transporteinheitserstreckung. Dadurch kann auch bei herkömmlichen Transporteinheiten mit quadratischer oder rechteckiger Grundfläche der Durchsatz vergrößert werden, indem die Objekte außermittig auf den Transporteinheiten platziert werden.

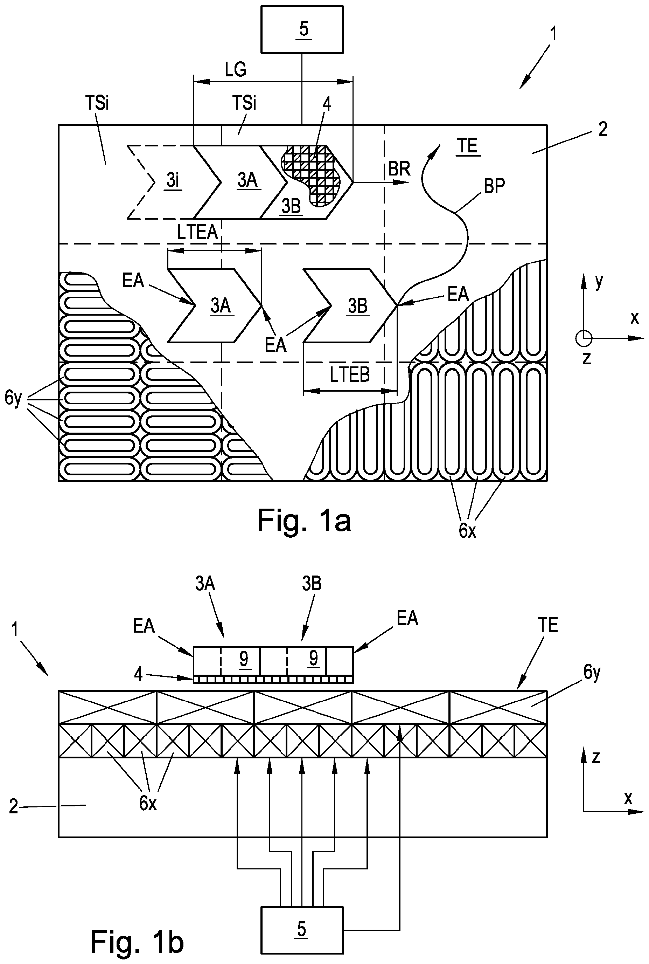

Vorzugsweise werden die Transporteinheiten dabei so relativ zueinander positioniert und die Objekte relativ zu den Transporteinheiten so angeordnet, dass die Objekte in Bewegungsrichtung auf einer Geraden liegen. Dies kann beispielsweise vorteilhaft sein, um einen konstanten Abstand zwischen den Objekten und einer Arbeitsstation einzuhalten. Die gegenständliche Erfindung wird nachfolgend unter Bezugnahme auf die Figuren 1a bis 6 näher erläutert, die beispielhaft, schematisch und nicht einschränkend vorteilhafte Ausgestaltungen der Erfindung zeigen. Dabei zeigt

Fig.1a und 1b eine Transporteinrichtung in Draufsicht und in Seitenansicht,

Fig.2a-2g jeweils ein Paar von Transporteinheiten mit verschiedenen Eingriffsabschnitten in einer Eingriffsposition in Draufsicht,

Fig.3a+b jeweils drei Transporteinheiten in zwei unterschiedlichen Eingriffspositionen in Draufsicht,

Fig.3c zwei Transporteinheiten in einer Eingriffsposition in einer Seitenansicht,

Fig.4 eine Transporteinrichtung zur Durchführung eines Transportprozesses in Draufsicht und

Fig.5 eine Transporteinrichtung in Draufsicht zur Darstellung des erfindungsgemäßen Verfahrens,

Fig.6 eine Transporteinrichtung in einer alternativen Ausgestaltung in Draufsicht.

In Fig.1a ist eine beispielhafte Ausgestaltung einer Transporteinrichtung 1 gemäß der Erfindung in einer Draufsicht dargestellt. Fig. 1b zeigt die Transporteinrichtung 1 einer Vorderansicht. In der Transporteinrichtung 1 ein Stator 2 vorgesehen, der eine Transportebene TE ausbildet. Im dargestellten Beispiel ist die Transportebene TE eine horizontale Ebene, mit einer Hochachse Z, einer Längsachse X und einer Querachse Y. Natürlich wäre aber auch eine andere Anordnung möglich, beispielsweise vertikal oder in einem bestimmten Winkel geneigt. Das hängt im Wesentlichen von der gewünschten Verwendung der Transporteinrichtung 1 ab. Der Stator 2 ist hier aus einer Mehrzahl i von Transportsegmenten TSi aufgebaut, die aneinander angrenzen, um die Transportebene TE auszubilden. Dadurch kann ein Stator 2 modular aufgebaut werden und es können Transportebenen TEi mit verschieden großen Flächen realisiert werden. Natürlich ist dieser modulare Aufbau aber nur optional und ein Stator 2 könnte auch nur durch eine einzige Baugruppe ausgebildet sein. In der Transportebene TE des Stators 2 können eine oder mehrere Transporteinheiten (nachfolgend allgemein mit dem Bezugszeichen 3 versehen), unabhängig voneinander zumindest zweidimensional bewegt werden. Im dargestellten Beispiel sind das die Transporteinheiten 3A, 3B. Beispielsweise wäre eine Bewegung nur in einer Achsrichtung entlang der Längsachse X oder der Querachse Y möglich oder auch ein zweidimensionales Bewegungsprofil mit einer Y-Koordinate und einer X-Koordinate, wie durch das Bewegungsprofil BP der Transporteinheit 3B angedeutet ist. Bei entsprechender Ausführung der Transporteinrichtung 1 können auch die anderen vier Bewegungsfreiheitsgrade zumindest eingeschränkt verwendet werden, also auch eine Translation sowie eine Rotation in Richtung bzw. um die Hochachse Z und auch eine gewisse Rotation um die X- und Y- Achsen.

An den Transportsegmenten TSi, sind Antriebsspulen 6 vorgesehen, die von einer (oder mehreren) Planarmotor-Steuerungseinheit(en) 5 (Hardware und/oder Software) angesteuert werden. Als Antriebsspulen 6 kommen beispielsweise gewickelte Drahtspulen zum Einsatz oder auf einer Leiterplatte angeordnete, sogenannte PCB-Spulen (PCB=printed circuit board). In die Antriebsspulen 6 kann ein elektrischer Strom eingeprägt werden, um ein Magnetfeld zu erzeugen. Eine dafür möglicherweise erforderliche Leistungselektronik kann in der Planarmotor-Steuerungseinheit 5 oder am Stator 2 (z.B. an den Transportsegmenten TSi) angeordnet sein. Durch entsprechende Ansteuerung nebeneinander angeordneter Antriebsspulen 6 kann ein im Wesentlichen bewegtes Magnetfeld erzeugt werden. Die Antriebsspulen 6 sind vorteilhafterweise so am Stator 2 angeordnet, dass sich das Magnetfeld in beliebige Richtungen in der Transportebene TE erstrecken kann, um entsprechende Bewegungsprofile der Transporteinheiten 3 zu realisieren. Als Transportebene TE ist hier keine Ebene im mathematischen Sinn zu verstehen, sondern eine durch den Stator 2 begrenzte ebene Transportfläche, auf der sich die

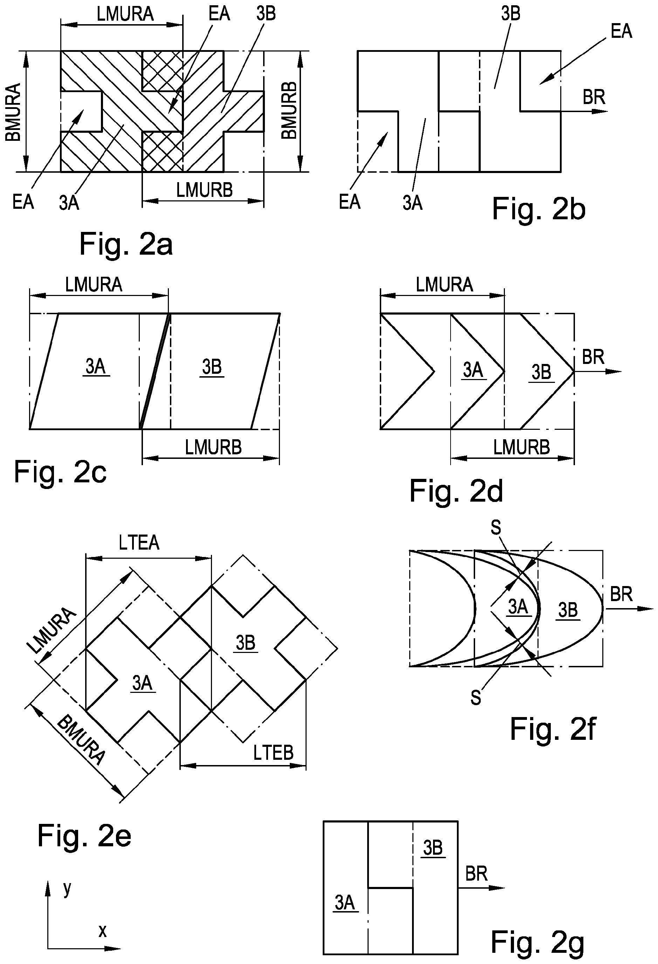

Transporteinheiten 3 bewegen können. Die Antriebsspulen 6 können am Stator 2 in einer Ebene angeordnet sein, z.B. in mehreren jeweils um 90° versetzten Spulengruppen (siehe Fig.2) oder in einer Fischgrätanordnung (siehe z.B.: Jansen, J. W., 2007. Magnetically levitated planar actuator with moving magnets. In: electromechanical analysis and Design Eindhoven: Technische Universiteit Eindhoven DOI: 10.6100/IR630846). Die Antriebsspulen 6 können aber auch in mehreren, übereinander liegenden Ebenen angeordnet sein, wie nachfolgend erläutert wird. Statt den Antriebsspulen 6 könnten aber in bekannter Weise auch (nicht dargestellte) bewegliche Permanentmagnete an dem/den Transportsegmenten TSi vorgesehen sein. Um ein zeitlich veränderliches (bewegtes) Magnetfeld zu erzeugen, können die Permanentmagnete von der Steuerungseinheit 5 angesteuert werden, sodass diese in bestimmter Weise bewegt werden. Auf eine detaillierte Beschreibung wird an dieser Stelle verzichtet.

An den Transporteinheiten 3 sind jeweils Antriebsmagnete 4 angeordnet, beispielsweise Permanentmagnete, die mit den Antriebsspulen 6 zusammenwirken, um eine Antriebskraft auf die Transporteinheit 3 auszuüben. Je nach Ansteuerung der Antriebsspulen 6 wird damit ein bewegtes Magnetfeld erzeugt, das mit den Antriebsmagneten 4 zusammenwirkt, um die Transporteinheit 3 zu bewegen. Im Betrieb ist zwischen den Antriebsspulen 6 des Planarmotors 2 und den Antriebsmagneten 4 einer Transporteinheit 3 ein Luftspalt vorgesehen. Neben der zweidimensionalen Bewegung in der Transportebene TE ist auch eine gewisse Bewegung der Transporteinheiten 3 in Hochrichtung möglich, also normal auf die Transportebene TE, hier in Z-Richtung. Die Antriebsspulen 6 bewirken also auch (Schwebe-)Kräfte in Z-Richtung. Durch eine entsprechende Ansteuerung der Antriebsspulen 6 kann der Luftspalt in begrenztem Maße erhöht und verringert werden, wodurch die Transporteinheit 3 in Hochrichtung bewegt werden kann. Die Größe des verfügbaren Bewegungsspielraums in Hochrichtung hängt dabei im Wesentlichen von der konstruktiven Ausgestaltung der Transporteinrichtung 1 ab, insbesondere vom maximal erzeugbaren Magnetfeld der Antriebsspulen 6 und der Antriebsmagnete 4, sowie der Masse und Belastung der Transporteinheit (z.B. vom Gewicht eines transportierten Objektes). Je nach Größe und Auslegung der Transporteinrichtung 1 kann der verfügbare Bewegungsbereich in Hochrichtung beispielsweise im Bereich weniger mm bis mehrere Zentimeter betragen. Auch eine rotative Bewegung der Transporteinheiten 3A, 3B um die Z-Achse sowie in begrenztem Maße auch um die Y- und X-Achse ist möglich.

Im gezeigten Beispiel in Fig.1a+b sind die Antriebsspulen 6 in zwei Schichten in Z-Richtung übereinander angeordnet. In einer ersten Schicht sind Antriebsspulen 6y so orientiert, dass sie zur Kraftbildung auf die Transporteinheit 3 in Y- und Z-Richtung verwendet werden können. In einer zweiten Schicht sind die Antriebsspulen 6x so orientiert, dass sie zur Kraftbildung auf die Transporteinheit 3 in X- und Z-Richtung verwendet werden können.

Beide Schichten erstrecken sich im Wesentlichen vollständig über die gesamte Transportebene TE, um einen möglichst großen Bewegungsbereich für die Transporteinheiten 3 zu bilden. Im dargestellten Beispiel liegt die erste Schicht mit den Antriebsspulen 6y in Z-Richtung näher an der Oberfläche und damit näher an den Transporteinheiten 3, als die zweite Schicht mit den Antriebsspulen 6x, wie in Fig. 1b ersichtlich ist. Natürlich ist dies nur beispielhaft und die Anordnung könnte auch umgekehrt sein. Die Antriebsspulen 6x und 6y müssen auch nicht orthogonal zueinander ausgerichtet sein. Es könnten auch noch eine oder mehrere weitere Schichten von Antriebsspulen 6 vorgesehen sein. Weiters können die Antriebsspulen 6 einer Schicht in einem beliebigen Winkel zu den Antriebsspulen 6 in den benachbarten Schichten angeordnet sein. Die Gesamtheit der Antriebsspulen 6 erlaubt jedoch eine Bewegung sowohl in X- als auch in Y-Richtung. Die Antriebsspulen 6 sind vorzugsweise als sogenannte Luftspulen ohne Eisenkern ausgeführt, um die permanentmagnetische Anziehungskraft zwischen Transporteinheiten 3 und den Transportsegmenten TSi zu reduzieren oder zu vermeiden. Dadurch werden die Transporteinheiten 3 durch die Antriebsmagnete 4 weniger stark in Richtung der Transportebene TE angezogen.

Im dargestellten Beispiel kann auf eine externe Lagerung der Transporteinheiten 3 verzichtet werden. Die Transporteinheiten 3 schweben rein durch die von den Antriebsmagneten 4 der Transporteinheit 3 und den Antriebsspulen 6 des Transportsegments TSi erzeugte magnetische (Schwebe-)kraft, die hier in Z-Richtung wirkt. Der gewünschte Luftspalt zwischen Antriebsspulen 6 und Antriebsmagneten 4 muss aber nicht notwendigerweise rein magnetisch erzeugt bzw. aufrechterhalten werden, sondern die Transporteinheiten 3 können auch in beliebiger anderer Weise gelagert werden. Dazu können beispielsweise beliebige geeignete Mechanismen zusammenwirken, beispielsweise mechanische, magnetische, elektromagnetische, pneumatische, usw. Im gezeigten Beispiel ist eine Planarmotor-Steuerungseinheit 5 vorgesehen, mit welcher die Antriebsspulen 6 des Stators 2 angesteuert werden können. Die Planarmotor-Steuerungseinheit 5 kann z.B. auch mit einer (nicht dargestellten) übergeordneten Steuerungseinheit verbunden sein, beispielsweise um mehrere Transporteinrichtungen 1 gemeinsam zu steuern und zu synchronisieren. Die Planarmotor-Steuerungseinheiten 5 könnten aber natürlich auch in die übergeordnete Steuerungseinheit integriert sein. Es kann auch vorgesehen sein, dass für jedes Transportsegment TSi, oder eine Gruppe von Transportsegmenten TSi, jeweils eine Segmentsteuereinheit (Hardware und/oder Software) vorgesehen ist, die auch in einer Planarmotor-Steuerungseinheit 5 oder übergeordneten Steuerungseinheit integriert sein kann oder als separate Einheit ausgebildet sein kann. Die Planarmotor-Steuerungseinheit 5 und/oder die übergeordnete Steuerungseinheit kann z.B. an eine nicht dargestellte Benutzerschnittstelle, beispielsweise einen Computer, angebunden sein, über den die Transporteinheit 1 gesteuert werden kann. Über die Planarmotor-Steuerungseinheit 5 und/oder die übergeordnete Steuerungseinheit können die Bewegungsprofile von Transporteinheiten 3 miteinander synchronisiert bzw. aufeinander abgestimmt werden, beispielsweise um eine Kollision von Transporteinheiten 3 oder von damit transportierten Objekten zu vermeiden. Auf der Planarmotor-Steuerungseinheit 5 läuft ein Steuerungsprogramm, das die gewünschten Bewegungsprofile der Transporteinheiten 3 realisiert. Der Aufbau und die Funktionsweise eines Planarmotors sind aber grundsätzlich bekannt, weshalb an dieser Stelle keine detailliertere Beschreibung erfolgt. An dieser Stelle sei angemerkt, dass der Aufbau nur beispielhaft ist und natürlich auch umgekehrt ausgeführt sein kann. Die Antriebsspulen 6 oder die beweglichen Permanentmagneten könnten also auch an den Transporteinheiten 3 angeordnet sein und die Antriebsmagnete 4 könnten am Stator 2 angeordnet sein. In diesem Fall wäre an den Transporteinheiten 3 eine Energieversorgung zur Ansteuerung der Antriebsspulen 6 oder der beweglichen Permanentmagnete vorgesehen. An der grundlegenden Funktionsweise der Transporteinrichtung ändert sich dabei aber nichts.

Die Transporteinheiten 3 weisen einen Grundkörper 9 mit einer bestimmten Grundfläche auf. An der Unterseite, die im Betrieb der Transportebene TE zugewandt ist, sind in bekannter Weise Antriebsmagnete 4 angeordnet. Auf der gegenüberliegenden Oberseite des Grundkörpers 9 kann beispielsweise ein zu transportierendes Objekt O angeordnet werden. Man unterscheidet grundsätzlich zwischen der bekannten 1D-Anordnung und der 2D-Anordnung der Antriebsmagnete 4. Bei der 1D-Anordnung sind die Antriebsmagnete 4 in Magnetgruppen aufgeteilt, ähnlich wie die Antriebsspulen 6 am Transportsegment TSi. In jeder Magnetgruppe ist eine bestimmte Anzahl von länglichen Antriebsmagneten 4 vorgesehen, wobei die Antriebsmagnete 4 nebeneinander angeordnet sind und sich Antriebsmagnete 4 unterschiedlicher magnetischer Polung bzw. Magnetisierungsrichtung abwechseln. Die Antriebsmagnete 4 einer Magnetgruppen sind geometrisch anders orientiert als die Antriebsmagnete 4 der jeweils anderen Magnetgruppen.

Als vorteilhaft hat sich auch die bekannte Halbach-Anordnung erwiesen, bei der die Magnetisierungsrichtung angrenzender Antriebsmagnete 4 jeweils um 90° zueinander gedreht ist. Allgemein können die Magnetisierungsrichtungen benachbarter Antriebsmagnete 4 innerhalb einer Magnetgruppe aber auch um einen anderen Winkel zueinander gedreht sein, beispielsweise 45°. Die Halbach-Anordnung hat den Vorteil, dass der magnetische Fluss auf einer Seite der Magnetgruppe (vorzugsweise die der Transportebene TE zugewandte Seite) größer ist als auf der gegenüberliegenden Seite. Ein besonders vorteilhaftes, sinusförmiges magnetisches Feldbild des Magnetfeldes einer Magnetgruppe kann erreicht werden, wenn die Magnetbreite und Magnethöhe der einzelnen Antriebsmagnete 4 in der Magnetgruppe entsprechend angepasst wird, z.B. wenn die jeweils äußersten Antriebsmagnete 4 der Magnetgruppe eine verringerte, insbesondere die halbe Magnetbreite aufweisen, als die dazwischenliegenden Antriebsmagnete 4 der Magnetgruppe.

Vorzugsweise stehen die Antriebsmagnete 4 benachbarter Magnetgruppen in einem Winkel von 90 Grad zueinander. Die Magnetgruppen einer Orientierung können z.B. für eine Bewegung der Transporteinheit 3 in Y-Richtung vorgesehen sein, indem die jeweiligen Magnetgruppen mit den Antriebsspulen 6y der Ausgestaltung gemäß Fig.1a+1b zusammenwirken. Die Magnetgruppen mit der jeweils anderen Orientierung können in analoger Weise für eine Bewegung der Transporteinheit 3 in X-Richtung vorgesehene sein. Dazu können die Magnetgruppen mit den Antriebsspulen 6x der Ausgestaltung gemäß Fig.1a+1b zusammenwirken. Wenn die Transporteinheit 3 um 90 Grad gedreht wird, wirken die Magnetgruppen mit den Antriebsspulen der jeweils anderen Spulengruppen zusammen.

Bei der 2D-Anordnung sind einzelne Antriebsmagnete 4 unterschiedlicher Polung bzw. Magnetisierungrichtung schachbrettartig angeordnet, wie durch die unterschiedliche Schraffur an der Transporteinheit 3B in Fig.1a angedeutet ist. Dadurch können flexiblere Grundflächen der Transporteinheiten 3 realisiert werden, weil man die Antriebsmagnete 4 der 2D-Anordnung sehr flexible gruppieren kann. Natürlich sind die dargestellten 1D- und 2D-Anordnungen aber nur beispielhaft zu verstehen und es ist unmittelbar ersichtlich, dass es eine Vielzahl von verschiedenen Möglichkeiten der 1D- und 2D-Anordnungen geben kann. Die konkrete Ausführung der Antriebsmagnete spielt für die Erfindung aber auch keine wesentliche Rolle, weshalb nachfolgend auf eine nähere Beschreibung verzichtet wird.

Erfindungsgemäß sind in der Transporteinrichtung 1 zumindest zwei Transporteinheiten 3A, 3B vorgesehen, wobei jeweils zumindest ein Eingriffsabschnitt EA an den Transporteinheiten 3A, 3B vorgesehen ist. Natürlich können aber auch noch weitere (nicht dargestellte) Transporteinheiten 3i vorgesehen sein, an denen in analoger Weise zumindest ein Eingriffsabschnitt EA vorgesehen ist. Es können natürlich auch noch beliebig anders ausgestaltete Transporteinheiten 3i zusätzlich in der Transporteinrichtung 1 vorgesehen sein. Die zumindest zwei Transporteinheiten 3A, 3B können in der Transportebene TE in einer Bewegungsrichtung BR hintereinander in eine Eingriffsposition bewegt werden, in der die Eingriffsabschnitte EA der Transporteinheiten 3A, 3B zumindest teilweise in Eingriff sind. Die Eingriffsposition ist im oberen Bereich von Fig.1a dargestellt, wobei die gemeinsame Bewegungsrichtung BR hier die X-Richtung ist. Aufgrund der zumindest zweidimensionalen Bewegungsmöglichkeit der Transporteinheiten 3A, 3B in der Transportebene TE wäre aber selbstverständlich auch jede andere Bewegungsrichtung BR in der Transportebene TE möglich.

Die Eingriffsabschnitte EA sind so ausgebildet, dass sie sich in der Eingriffsposition zumindest in Bewegungsrichtung BR derart überlappen, dass eine Gesamterstreckung LG der Transporteinheiten 3A, 3B in Bewegungsrichtung BR geringer ist, als eine Summe der einzelnen Transporteinheitserstreckungen LTEA, LTEB der Transporteinheiten 3A, 3B in Bewegungsrichtung BR. Unter der Transporteinheitserstreckung ist dabei die Gesamtlänge einer Transporteinheit in Bewegungsrichtung BR zu verstehen. Vorzugsweise ist zumindest ein Eingriffsabschnitt EA einer Transporteinheit 3A komplementär zu zumindest einem Eingriffsabschnitt EA der jeweils anderen Transporteinheit 3B ausgebildet. Im gezeigten Beispiel ist der rechte Eingriffsabschnitt EA der Transporteinheit 3A komplementär zum linken Eingriffsabschnitt EA der rechten Transporteinheit 3B ausgebildet. Unter komplementär ist hierbei zu verstehen, dass die Eingriffsabschnitte EA gegengleich geformt sind, sodass sie sich im Wesentlichen wechselseitig ergänzen, z.B. konkav/konvex oder so wie dargestellt in Form eines pfeilförmigen Vorsprungs und einer pfeilförmigen Ausnehmung. Weitere Varianten werden nachfolgend anhand von Fig.2a-2g noch näher beschrieben. Dadurch können die Transporteinheiten 3A, 3B in der Eingriffsposition sehr nahe aneinander bewegt werden, ohne dass ein Spalt zwischen den Transporteinheiten 3A, 3B vorliegt. Die Transporteinheiten 3A, 3B können dadurch im Wesentlichen formschlüssig ineinander bewegt werden.

Natürlich ist die Darstellung nur beispielhaft zu verstehen, um das Prinzip der Erfindung zu veranschaulichen. Vorzugsweise werden natürlich in analoger Weise mehr als zwei Transporteinheiten 3A, 3B, ...3i hintereinander in eine Eingriffsposition bewegt, wie in Fig.1a gestrichelt angedeutet ist. Dadurch kann der Durchsatz an transportierten Objekten in der Bewegungsrichtung BR gegenüber herkömmlichen Transporteinheiten mit quadratischer Grundfläche und gleicher Transporteinheitserstreckung erhöht werden, weil ein mittlerer Objektabstand zwischen den transportierten Objekten in Bewegungsrichtung BR verringert wird. Der mittlere Objektabstand OAM ergibt sich zu

$$OAM = \frac{\sum OAi}{n-1}$$

mit den Objektabständen OAi zwischen den Objekten O jeweils zweier hintereinander angeordneter Transporteinheiten 3 und der Anzahl n an Transporteinheiten 3 in Eingriffsposition.

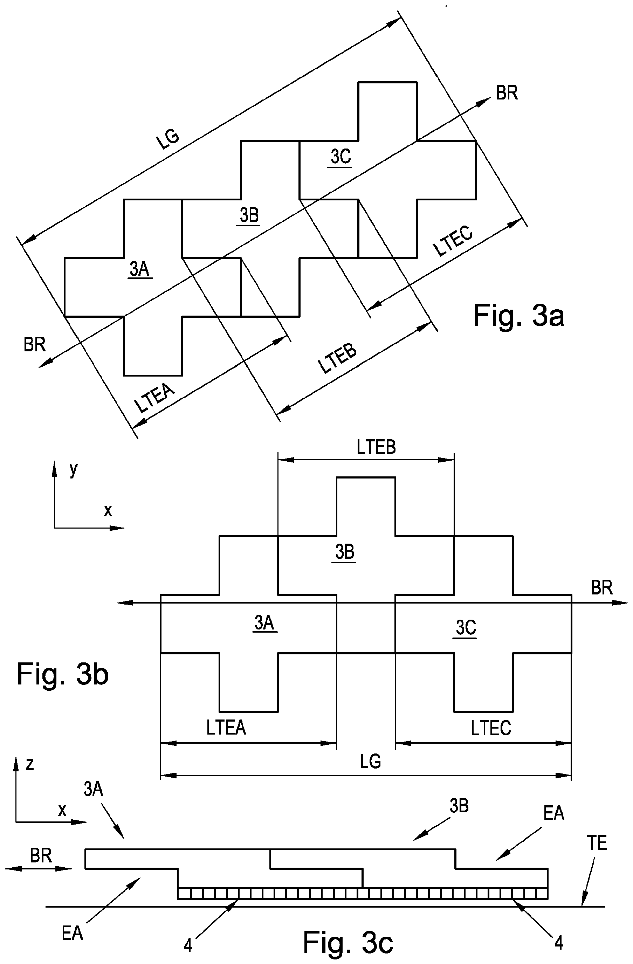

Im gezeigten Beispiel in Fig.1a überlappen sich die Transporteinheiten 3A, 3B teilweise in Bewegungsrichtung BR und vollständig in Richtung normal zur Bewegungsrichtung BR (hier in Y-Richtung), sodass die Seitenkanten der Transporteinheiten 3A, 3B fluchten. Natürlich wäre aber auch eine andere Art der Überlappung möglich. Beispielsweise könnten die komplementären Eingriffsabschnitte EA so ausgebildet sein, dass sie in der Eingriffsposition nicht nur in Bewegungsrichtung BR überlappen, sondern zusätzlich in einer normal auf die Transportebene stehenden Richtung, hier in Z-Richtung, wie in Fig.3c dargestellt ist. Alternativ oder zusätzlich wäre auch eine versetzte Eingriffsposition möglich, beispielsweise wenn die komplementären Eingriffsabschnitte EA so wie in Fig.3a+b dargestellt im ausgebildet sind.

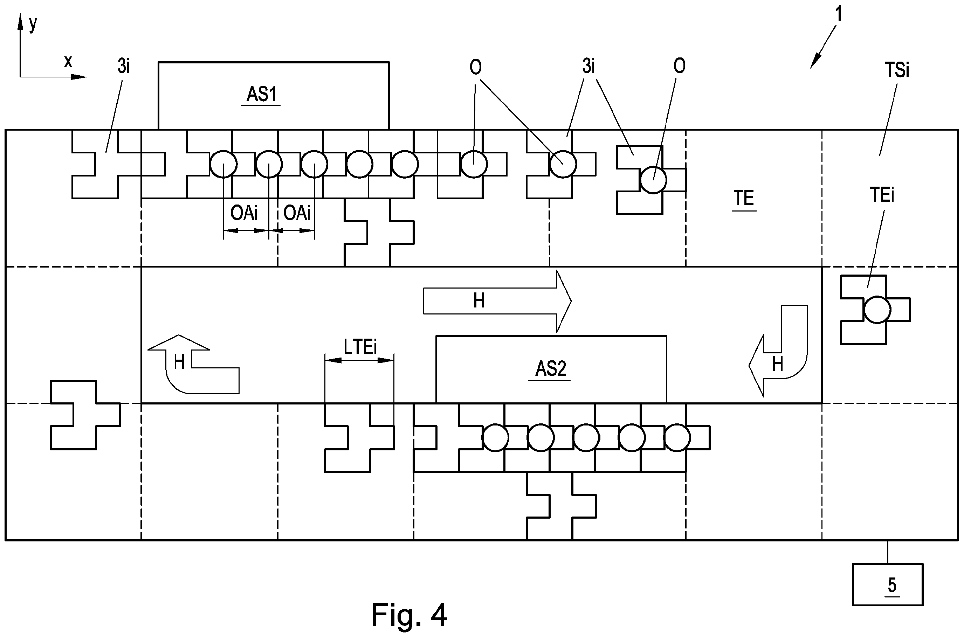

An den Transporteinheiten 3A, 3B könnte jeweils nur ein Eingriffsabschnitt EA vorgesehen sein, z.B. so wie in Fig.2g dargestellt ist, vorzugsweise sind aber mehrere Eingriffsabschnitte EA an einer Transporteinheit 3A, 3B vorgesehen, beispielsweise zwei Eingriffsabschnitte EA an gegenüberliegenden Seiten der jeweiligen Transporteinheit 3A, 3B, wie in Fig.1a und Fig.2a-2f. Dies ist vorteilhaft, um mehrere Transporteinheiten 3i in Bewegungsrichtung BR hintereinander in Eingriffsposition zu bringen, wie z.B. in Fig.4 dargestellt ist. Wenn mehrere Eingriffsabschnitte EA an einer Transporteinheit 3A angeordnet sind, sind diese vorzugsweise komplementär ausgebildet, wie z.B. in Fig.1a dargestellt ist. Dadurch können identische Transporteinheiten 3A, 3B verwendet werden. Wenn an einer Transporteinheit 3A, 3B mehrere Eingriffsabschnitte EA vorgesehen sind, können diese aber auch an aneinander angrenzenden Seiten der jeweiligen Transporteinheit 3A, 3B angeordnet sein, beispielsweise um 90° um die Hochachse zueinander versetzt, wie dies z.B. an den in Fig.2e dargestellten Transporteinheiten 3A, 3B mit kreuzförmiger Grundfläche der Fall ist. Diese Transporteinheiten 3A, 3B weisen aufgrund ihrer kreuzförmigen Grundfläche an allen vier Seiten jeweils einen Eingriffsabschnitt EA auf.

Die Eingriffsabschnitte EA einer Transporteinheit könnten aber auch gleichartig und vorzugsweise komplementär zu zumindest einem Eingriffsabschnitt EA einer anderen Transporteinheit ausgebildet sein. Beispielsweise könnten an einer Transporteinheit 3A zwei pfeilförmige Ausnehmungen (analog wie an den Transporteinheiten 3A, 3B in Fig.1a jeweils rechts) an gegenüberliegenden Seiten in Bewegungsrichtung BR angeordnet sein und an der Transporteinheit 3B könnten entsprechend zwei pfeilförmige Vorsprünge (analog wie an den Transporteinheiten 3A, 3B in Fig.1a jeweils links) an gegenüberliegenden Seiten in Bewegungsrichtung BR angeordnet sein. Die Transporteinheiten 3A, 3B können hierbei in gleicher Weise wie bisher in eine Eingriffsposition gebracht werden, allerdings sind die Transporteinheiten 3A, 3B in diesem Fall nicht identisch ausgeführt. In analoger Weise kann dies auch bei beliebig anders ausgebildeten Eingriffsabschnitten EA der Fall sein. Unter gleichartigen Eingriffsabschnitten EA sind im Rahmen der Erfindung Eingriffsabschnitte EA mit ähnlicher Geometrie zu verstehen, die gleich oder verschieden groß sind. Beispielsweise können zwei pfeilförmige Vorsprünge verschiedener Größe an einer Transporteinheit 3 angeordnet sein, die somit gleichartig sind. Wenn die pfeilförmigen Vorsprünge zusätzlich auch die gleiche Größe haben sind sie nicht nur gleichartig, sondern identisch. Das selbe gilt natürlich auch für alle anderen Ausführungsformen von Eingriffsabschnitten EA.

In Fig.2a-2g sind beispielhaft verschiedene Ausführungsformen von Transporteinheiten 3A, 3B mit verschiedenen Eingriffsabschnitten EA jeweils in einer Draufsicht dargestellt. Die Bewegungsrichtung BR verläuft jeweils in Richtung der X-Achse. Die Transporteinheiten 3A, 3B weisen jeweils eine auf die Transportebene TE projizierte Grundfläche auf, wie beispielhaft in Fig.2a durch die schraffierte Fläche der Transporteinheit 3A angedeutet ist. Die Grundfläche jeder Transporteinheit 3A, 3B kann von einem minimal umgebenden Rechteck umschrieben werden. Das minimal umgebende Rechteck bezeichnet das kleinstmögliche achsenparallele Rechteck, das die Grundfläche der Transporteinheit 3A, 3B umschließt. In Fig.2a ist weisen die minimal umgebenden Rechtecke der beiden Transporteinheiten 3A, 3B jeweils eine Länge LMURA, LMURB in X-Richtung und eine Breite BMURA, BMURB in Y-Richtung auf. Allgemein gilt, dass sich in der Eingriffsposition zweier Transporteinheiten die minimal umgebenden Rechtecksflächen der zwei Transporteinheiten 3A, 3B überschneiden, wie durch die kreuzweise Schraffur in Fig.2a angedeutet ist. Die Grundflächen und die minimal umgebenden Rechtecksflächen sind nur in Fig.2a im Detail eingezeichnet. Dies gilt stellvertretend auch für die anderen Ausführungsformen in Fig.2b-2g, in denen die minimal umgebenden Rechtecksflächen nur gestrichelt bzw. strichpunktiert angedeutet sind. Vorzugsweise beträgt ein Verhältnis zwischen der minimal umgebenden Rechtecksfläche (LMUR x BMUR) und der Grundfläche einer Transporteinheit 3A, 3B maximal zwei, vorzugsweise maximal 1,5. Dadurch wird gewährleistet, dass die verfügbare Fläche zur Anordnung der Antriebsmagnete 4 ausreichend groß ist, um ausreichend große Antriebs- und Schwebekräfte erzeugen zu können. Zudem beträgt das Verhältnis zwischen der minimal umgebenden Rechtecksfläche und der Grundfläche einer Transporteinheit 3A, 3B vorzugsweise mindestens 1,1, besonders bevorzugt minimal 1,2, um einen ausreichend großen Eingriffsabschnitt EA ausbilden zu können.

Bei den Ausführungsformen gemäß Fig.2a-d und Fig.2f-g überlappen die komplementären Eingriffsabschnitte EA der Transporteinheiten 3A, 3B in der Bewegungsrichtung BR und die Transporteinheiten 3A, 3B überlappen vollständig in Richtung normal zur Bewegungsrichtung BR, hier in Y-Richtung, sodass die Seitenkanten fluchten. Beim Beispiel in Fig.2e weisen die Transporteinheiten 3A, 3B jeweils eine im Wesentlichen kreuzförmige Grundfläche auf. Dadurch ist nicht nur eine Eingriffspositionen möglich, sondern es sind verschiedene Eingriffspositionen realisierbar, wie beispielsweise in Fig.3a+b dargestellt ist. Hier überlappen sich die Eingriffsabschnitte EA in Bewegungsrichtung BR (entspricht der X-Richtung) und die Transporteinheiten 3A, 3B überlappen sich zudem teilweise in Richtung normal auf die Bewegungsrichtung BR, hier in Y-Richtung. Im Unterschied zu den anderen Ausführungsformen überlappen sich die Transporteinheiten 3A, 3B hier in Y-Richtung nur teilweise, sind also zueinander versetzt.

In der Ausführungsform gemäß Fig.2f sind die komplementären Eingriffsabschnitte EA im Wesentlichen konkav/konvex ausgeführt und es in der Eingriffsposition ein gewisses Spiel S zwischen den Eingriffsabschnitten EA quer zur Bewegungsrichtung BR vorgesehen ist.

Dadurch ist auch wenn die Transporteinheiten 3A, 3B gemeinsam in der Eingriffsposition bewegt werden eine gewisse Relativbewegung zwischen den Transporteinheiten 3A, 3B möglich, wodurch z.B. schlangenförmige Bewegungsmuster durchgeführt werden können. Allgemein müssen sich zwei in Eingriffsposition befindliche Transporteinheiten 3i nicht berühren, sondern es ist ausreichen, wenn sie hinreichend nahe aneinander liegen, sodass die Bedingung erfüllt ist, wonach die Gesamterstreckung in Bewegungsrichtung geringer ist, als die Summe der einzelnen Transporteinheitserstreckungen in der Bewegungsrichtung.

In Fig.3a+3b sind jeweils drei Transporteinheiten 3A, 3B, 3C in zwei verschiedenen Eingriffspositionen dargestellt. In Fig.3a verläuft die Bewegungsrichtung BR schräg zur X- und Y-Richtung. In Fig.3b verläuft die Bewegungsrichtung in X-Richtung. In beiden Fällen gilt, dass sich die komplementären Eingriffsabschnitte EA jeweils zweier Transporteinheiten 3A+3B, 3B+3C in Bewegungsrichtung derart überlappen, dass die Gesamterstreckung aller Transporteinheiten 3A-3C in Bewegungsrichtung geringer ist, als die Summe der jeweiligen Transporteinheitserstreckungen LTEA-LTEC der Transporteinheiten 3A-3C. In Fig.3c ist eine beispielhafte Variante von komplementären Eingriffsabschnitten EA zweier Transporteinheiten 3A, 3B dargestellt, die sich nicht nur in Bewegungsrichtung BR überlappen, sondern zusätzlich in einer normal auf die Transportebene TE stehenden Hochrichtung, hier in Z-Richtung. Dadurch kann beispielsweise weiterhin eine rechteckige oder quadratische Grundfläche realisiert werden. Natürlich könnten die verschiedenen Varianten auch kombiniert werden, beispielsweise indem die in Fig.2a-2e gezeigten Ausführungsformen der komplementären Eingriffsabschnitte EA sich zusätzlich in Hochrichtung überlappen, sodass sich im Wesentlichen eine dreidimensionale Überlappung in drei normal aufeinander stehenden Richtungen ergibt.

Im Beispiel gemäß Fig.3b ist ersichtlich, dass die Transporteinheit 3B in der Eingriffsposition einen Versatz quer zur Bewegungsrichtung BR, hier in Y-Richtung, zu den beiden anderen Transporteinheiten 3A, 3C aufweist. Die Transporteinheiten 3A-3C können also in Querrichtung teilweise nebeneinander bewegt werden und müssen nicht fluchten, wie dies beispielsweise mit der Ausgestaltung in Fig.1a der Fall ist. Allgemein können

nen Transporteinheiten 3i damit quer zur Bewegungsrichtung BR auch zueinander versetzt bewegt werden. Dadurch ergibt sich insbesondere gegenüber bekannten Transporteinrichtungen in Form eines Langstatorlinearmotors eine größere Flexibilität. Beispielsweise können die Transporteinheiten 3A-3C in der dargestellten Eingriffsposition in Fig.3b gemeinsam in Bewegungsrichtung BR bewegt werden und während der gemeinsamen Bewegung in Bewegungsrichtung BR (oder auch im Stillstand) können einzelne Transporteinheiten 3i in Querrichtung aus der Eingriffsposition bewegt werden. Analog könnten auch während der Bewegung der Transporteinheiten 3A-3C in Bewegungsrichtung BR eine oder mehrere weitere Transporteinheiten 3i in Querrichtung in eine Eingriffsposition mit den Transporteinheiten 3A-3C bewegt werden.

In Fig.4 ist eine Transporteinrichtung 1 in Form eines Planarmotors in Draufsicht dargestellt. Mehrere Transportsegmente TSi sind ringförmig zusammengesetzt, sodass sich eine ringförmige Transportebene TE mit einem zentralen Freiraum ergibt. In der Transportebene TE sind eine Vielzahl an Transporteinheiten 3i angeordnet, die unabhängig voneinander zumindest zweidimensional in der Transportebene TE bewegt werden können, um jeweils ein Objekt O zu transportieren. An einigen Transporteinheiten 3i sind keine Objekte O angeordnet, weil diese z.B. noch nicht beladen wurden oder bereits entladen wurden. Die Bewegungssteuerung der Transporteinheiten 3i erfolgt in bekannter Weise über eine Planarmotor-Steuerungseinheit 5, welche die Antriebsspulen 6 der Transportsegmente TSi ansteuert. In der Transporteinrichtung 1 sind zwei Arbeitsstationen AS1, AS2 angeordnet, in denen jeweils ein bestimmter Arbeitsprozess an den transportierten Objekten O durchgeführt wird. Je nach Produktionsprozess sind verschiedene Arbeitsprozesse denkbar.

Beispielsweise könnten die Objekte O Behälter sein, welche in einer Arbeitsstation ASi befüllt werden. Die Objekte O könnten auch Produkte sein, an welchen in einer Arbeitsstation ASi ein bestimmter mechanischer Bearbeitungsschritt durchgeführt wird. Wie eingangs erwähnt gibt es meist eine Haupt-Prozessflussrichtung, in welcher ein möglichst großer Durchsatz an Objekten O gewünscht sein kann. Die Haupt-Prozessflussrichtung verläuft hier entlang einer geschlossenen Schleife parallel zu den Arbeitsstationen AS1, AS2, wie durch die Pfeile angedeutet ist. Im Bereich der Arbeitsstationen AS1, AS2 kann es beispielsweise erwünscht sein, dass möglichst viele Objekte O dicht hintereinander bewegt werden. Es ist also das Ziel, den mittleren Objektabstand OAM zu minimieren. Mit dem bisher bekannten Transporteinheits-Design mit quadratischer Grundfläche war man dabei limitiert, weil der minimale mittlere Objektabstand OAM im Wesentlichen der Länge einer Transporteinheit betrug. Mit der erfindungsgemäßen Ausführung der Transporteinheiten 3i kann der mittlere Objektabstand OAM von hintereinander bewegten Transporteinheiten 2i nunmehr trotz gleichbleibender Transporteinheitserstreckung deutlich reduziert werden, weil die Transporteinheiten 3i zumindest in Bewegungsrichtung BR (die hier der Haupt-Prozessflussrichtung entspricht) teilweise überlappen.

Wie in Fig.4 ersichtlich ist, werden mehrere Transporteinheiten 3i im Bereich der Arbeitsstationen AS1, AS2 in eine Eingriffsposition gebracht, in der sich die hier komplementären Eingriffsabschnitte EA aufeinanderfolgender Transporteinheiten 3i in Bewegungsrichtung BR überlappen. Die Transporteinheiten 3i können dann in dieser Eingriffsposition gemeinsam in Bewegungsrichtung BR durch den Bereich der Arbeitsstationen AS1, AS2 bewegt werden, wobei jeweils der entsprechende Arbeitsprozess an den Objekten durchgeführt werden kann. Vor und nach den Arbeitsstationen AS1, AS2 können die Transporteinheiten 3i wieder aus der Eingriffsposition gelöst werden und der Objektabstand OAi zur jeweils in Bewegungsrichtung BR dahinterfahrenden Transporteinheit 3i kann wieder vergrößert werden, z.B. weil der Objektabstand OA außerhalb der Arbeitsstation keine wesentliche Rolle spielt. Beispielsweise könnten die Transporteinheiten 3i in der Eingriffsposition mit relativ geringer Geschwindigkeit durch die Arbeitsstationen AS1, AS2 bewegt werden, um ausreichend Zeit zur Durchführung des Arbeitsprozesses zu haben.

Nach Beendigung des Arbeitsprozesses an der vordersten Transporteinheit 3i kann diese individuell beschleunigt werden, um möglichst rasch zur nächsten Arbeitsstation ASi oder zu einer Entladestation zu gelangen. Wie in Fig.4 ersichtlich, ist es auch möglich, dass im Bereich der Arbeitsstationen ASi einzelne Transporteinheiten 3i die in der Eingriffsposition befindlichen Transporteinheiten 3i überholen. Es wäre auch möglich, dass eine Transporteinheit 3i quer zur Bewegungsrichtung BR aus der Eingriffsposition bewegt wird, beispielsweise um schadhafte Objekte O aus dem Arbeitsprozess auszuschleusen. Dadurch kann insbesondere gegenüber einer bekannten Transporteinrichtungen in Form eines Langstatorlinearmotors, bei der die Transporteinheiten nur in einer Richtung hintereinander bewegt werden, wesentlich flexiblere Transportprozesse realisiert werden. Die Transporteinheiten 3i sind hier identisch ausgeführt und entsprechen der in Fig.2a dargestellten Ausführungsform. Natürlich könnten aber auch andere Formen verwendet werden oder verschiedene Ausführungsformen kombiniert werden.

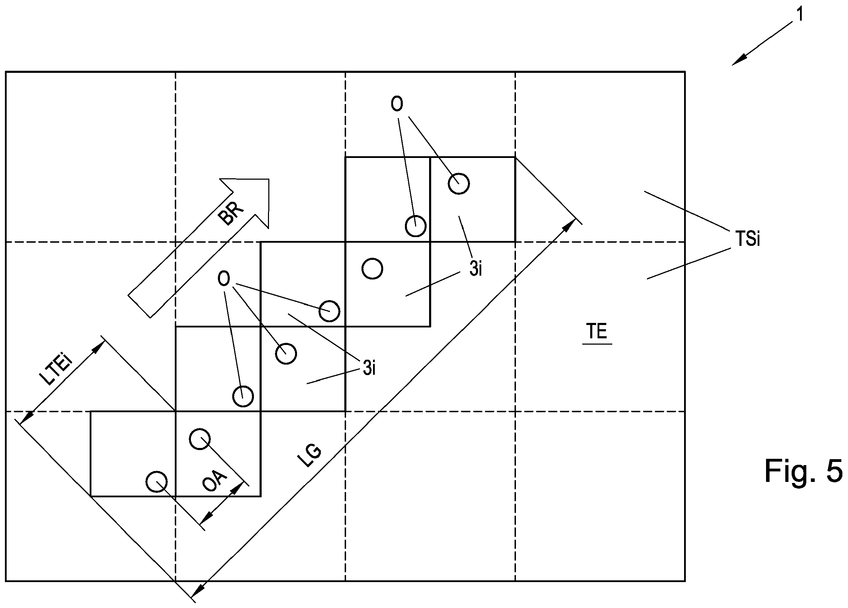

In Fig.5 ist eine Transporteinrichtung 1 dargestellt anhand der nachfolgend ein erfindungsgemäßes Verfahren zum Betreiben der Transporteinrichtung 1 beschrieben wird. Die Transporteinrichtung 1 weist mehrere Transportsegmente TSi auf, die gemeinsam eine geschlossene Transportebene TE ausbilden. In der Transportebene TE sind hier acht Transporteinheiten 3i mit jeweils quadratischer Grundfläche angeordnet. Die Transporteinheiten 3i könnten aber auch eine Grundfläche mit einer beliebig anderen Form aufweisen. Die Transporteinheiten 3i müssen auch nicht identisch ausgeführt sein, sondern könnten unterschiedliche Formen aufweisen. Die Steuerung der Transporteinrichtung 1 erfolgt durch zumindest eine (nicht dargestellte) Planarmotor-Steuerungseinheit oder eine übergeordnete Steuerungseinheit. An jeder Transporteinheit 3i ist ein zu transportierendes Objekt O angeordnet. Erfindungsgemäß werden die Transporteinheiten 3i in der Transportebene TE in einer Bewegungsrichtung BR so hintereinander bewegt, dass sie sich zumindest in Bewegungsrichtung BR derart überlappen, dass eine Gesamterstreckung LG der Transporteinheiten 3i in Bewegungsrichtung BR geringer ist, als eine Summe der einzelnen Transporteinheitserstreckungen LTEi der Transporteinheiten 3i in Bewegungsrichtung BR. Durch die erfindungsgemäße Steuerung der Transporteinheiten 3i kann auch bei Transporteinheiten 3i ohne komplementäre Eingriffsabschnitte EA der mittlere Objektabstand OAM verringert werden.

Vorteilhafterweise werden die Objekte O dabei derart auf den Transporteinheiten 3i positioniert, dass ein mittlerer Objektabstand OAM zwischen den Objekten O in Bewegungsrichtung BR maximal der mittleren Transporteinheitserstreckung LTEm der Transporteinheiten 3i in Bewegungsrichtung BR beträgt. Vorzugsweise beträgt der mittlere Objektabstand OAM jedoch maximal zwei Drittel der mittleren Transporteinheitserstreckung LTEm. Dabei ist es besonders vorteilhaft, wenn die Transporteinheiten 3i relativ zueinander und die Objekte O relativ zu den Transporteinheiten 3i so angeordnet werden, dass die Objekte O in Bewegungsrichtung BR auf einer Geraden liegen. Dadurch kann beispielsweise ein konstanter Abstand zwischen den Objekten O und einer Arbeitsstation quer zur Bewegungsrichtung BR erreicht werden. Besonders vorteilhaft ist es hierbei, wenn die Objekte O so positioniert werden, dass der mittlere Objektabstand OAM maximal der halben mittleren Transporteinheitserstreckung LTEm der Transporteinheiten 3i in Bewegungsrichtung BR entspricht.

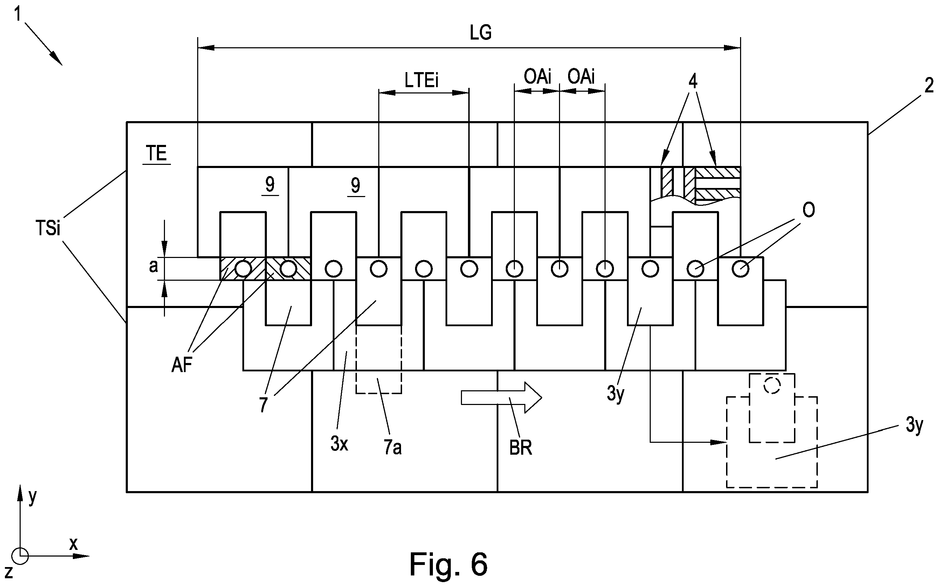

In Fig.6 ist ein weiteres vorteilhaftes Ausführungsbeispiel einer Transporteinrichtung 1 dargestellt. Der Stator 2 ist hier wiederum durch eine Mehrzahl von Transportsegmenten TSi gebildet, die aneinander angrenzen, um gemeinsam eine Transportebene TE auszubilden. In der Transportebene TE sind mehrere Transporteinheiten 3i angeordnet, die unabhängig voneinander zumindest zweidimensional in der Transportebene TE bewegbar sind. Die Steuerung der Transporteinrichtung 1, insbesondere der Bewegung der Transporteinheiten 3i erfolgt wiederum durch zumindest eine (nicht dargestellte) Planarmotor-Steuerungseinheit oder eine übergeordnete Steuerungseinheit. Die Transporteinheiten 3i sind hier identisch ausgebildet und weisen jeweils einen Grundkörper 9 mit einer quadratischen Grundfläche auf. Natürlich ist dies nur beispielhaft und es könnten auch verschiedene Transporteinheiten 3i mit unterschiedlichen Formen vorgesehen sein. An der, der Transportebene TE zugewandten Unterseite der Grundkörper 9 sind in bekannter Weise jeweils Antriebsmagnete 4 angeordnet, wie an der Transporteinheit 3i in Fig.6 rechts oben angedeutet ist (Grundkörper teilweise aufgebrochen dargestellt). Die Antriebsmagnete 4 wirken mit (nicht dargestellten) Antriebsspulen des Stators 2 zusammen, um die Transporteinheiten 3i zu bewegen. Die Antriebsmagnete 4 sind hier in der bekannten 1D-Anordnung an der Transporteinheit angeordnet, natürlich wäre aber auch eine 2D-Anordnung möglich, wie in Fig.1a dargestellt ist.

An der, den Antriebsmagneten 4 gegenüberliegenden Oberseite des Grundkörpers 9 jeder Transporteinheit 3i ist ein Objektträger 7 angeordnet, der Teil der jeweiligen Transporteinheiten 3i ist. Der Objektträger 7 weist hier eine rechteckige Grundfläche auf und erstreckt sich seitlich über die Grundfläche des Grundkörpers 9 um eine Auskragungslänge a hinaus. Dadurch wird eine auf die Transportebene TE projizierte Auskragungsfläche AF gebildet, wie beispielhaft an zwei Transporteinheiten 3i durch die schraffierten Bereiche angedeutet ist. Dadurch können die Transporteinheiten 3i, so wie dargestellt, in einer Bewegungsrichtung BR (hier in X-Richtung) so hintereinander bewegt werden, dass sich jeweils zwei in Bewegungsrichtung BR aufeinanderfolgende Transporteinheiten 3i (hier abwechselnd eine obere und eine untere Transporteinheit 3i) in Bewegungsrichtung BR und auch quer zur Bewegungsrichtung BR (hier in Y-Richtung) derart überlappen, dass eine Gesamterstreckung LG der Transporteinheiten 3i in Bewegungsrichtung BR geringer ist, als eine Summe der einzelnen Transporteinheitserstreckungen LTEi der Transporteinheiten 3i in Bewegungsrichtung BR.

In der dargestellten Formation der Transporteinheiten 3i sind die Grundkörper 9 von jeweils zwei in Bewegungsrichtung BR aufeinanderfolgende Transporteinheiten 3i (hier abwechselnd eine obere und eine untere Transporteinheit 3i) in Y-Richtung um die Auskragungslänge a beabstandet. Die Auskragungslänge a ist damit jener Abstand, in dem sich die beiden Transporteinheiten 3i in Y-Richtung überlappen. Der Abstand in Y-Richtung könnte aber grundsätzlich auch noch verringert werden, sodass die Grundkörper 9 in Y-Richtung direkt aneinander angrenzen und die Auskragungsfläche AF des Objektträgers 7 einer Transporteinheit 3i den Grundkörper 9 der jeweils anderen Transporteinheit 3i zusätzlich in Z-Richtung überlappt. Im gezeigten Beispiel wird mit jeder Transporteinheit 3i ein Objekt O transportiert, das jeweils im Bereich der Auskragungsfläche AF am Objektträger 7 angeordnet ist. Dadurch kann erreicht werden, dass der mittlere Objektabstand OAM zwischen den Objekten O in Bewegungsrichtung BR geringer ist, als die mittlere Transporteinheitserstreckung LTEi der Transporteinheiten 3i in Bewegungsrichtung BR. Durch die Anordnung eines Objektträgers 7 auf einer Transporteinheit 3i mit rechteckiger oder quadratischer Grundfläche kann auf einfache Weise ein Eingriffsabschnitt EA realisiert werden, ohne die Form des Grundkörpers verändern zu müssen.

Die dargestellten Ausführungsform ist weiters vorteilhaft, weil eine oder mehrere Transporteinheiten 3i auf einfache Weise aus der Eingriffsposition ausgeschleust werden können. Beispielsweise kann die Transporteinheit 3y in Y-Richtung aus der Eingriffsposition bewegt werden und danach beliebig in der Transportebene TE weiterbewegt werden, wie durch den Pfeil und die gestrichelte Transporteinheit 3y angedeutet ist. Dadurch können beispielsweise schadhafte Objekte O aus einem Produktionsprozess entfernt werden. Das Ausschleusen kann dabei im Stillstand oder während der Bewegung der Transporteinheiten 3i erfolgen. Auch ein erneutes Einschleusen der Transporteinheit 3i an der gleichen Position oder an einer anderen Position ist dadurch möglich, z.B. um einen bestimmten Arbeitsprozess zu wiederholen.

Natürlich wären im dargestellten Beispiel auch beliebig andere Varianten möglich. Z.B. könnte an einer oder mehreren Transporteinheiten 3i ein weiterer Objektträger 7a, beispielsweise an der gegenüberliegenden Seite einer Transporteinheit 3x angeordnet werden, wie in Fig.6 gestrichelt angedeutet ist. Z.B. könnte die beiden Objektträger 7, 7a in diesem Fall durch einen einzigen langen Objektträger ausgebildet sein, der den Grundkörper 9 auf den gegenüberliegenden Seiten überragt. Natürlich könnte stattdessen auch ein Eingriffsabschnitt EA wie anhand von Fig.1a-2g dargestellt an einer der Transporteinheiten 3i in Fig.6 vorgesehen sein. Daraus ist ersichtlich, dass mit der erfindungsgemäßen Transportrichtung 1 die Flexibilität eines Transportprozesses gegenüber herkömmlichen Transporteinrichtungen erhöht werden kann.

Insbesondere gegenüber bekannten linearen Transporteinrichtungen wie z.B. Langstatorlinearmotoren ist eine deutliche Verbesserung möglich, weil die Verringerung des mittleren Objektabstandes OAm nicht auf eine festgelegte Bewegungsrichtung begrenzt ist. Insbesondere aufgrund der zweidimensionalen Bewegungsmöglichkeit der Transporteinheiten 3i einer Transporteinrichtung 1 in Form eines Planarmotors kann die erfindungsgemäße Überlappung in vorteilhafter Weise in einer beliebigen Bewegungsrichtung BR genutzt werden, um den Objektabstand OAm zu verringern und dadurch den Objekt-Durchsatz in dieser Richtung zu erhöhen.

**Patentansprüche**

1. Transporteinrichtung (1) in Form eines Planarmotors mit zumindest einem Transportsegment (TSi), das eine Transportebene (TE) ausbildet und mit zumindest zwei Transporteinheiten (3A, 3B), die in der Transportebene (TE) zumindest zweidimensional bewegbar sind, wobei am Transportsegment (TSi) Antriebsspulen (6) oder bewegliche Permanentmagnete angeordnet sind und an den Transporteinheiten (3A, 3B) Antriebsmagnete (4) angeordnet sind, oder umgekehrt, wobei die Antriebsspulen (6) oder die beweglichen Permanentmagnete mit den Antriebsmagneten (4) magnetisch zusammenwirken, um die Transporteinheiten (3A, 3B) zu bewegen, wobei an den zumindest zwei Transporteinheiten (3A, 3B) jeweils zumindest ein Eingriffsabschnitt (EA) vorgesehen ist, wobei die zumindest zwei Transporteinheiten (3A, 3B) in der Transportebene (TE) in einer Bewegungsrichtung (BR) hintereinander in eine Eingriffsposition bewegbar sind, in der die Eingriffsabschnitte (EA) der Transporteinheiten (3A, 3B) zumindest teilweise in Eingriff sind, wobei die Eingriffsabschnitte (EA) dazu ausgebildet sind, sich in der Eingriffsposition zumindest in Bewegungsrichtung (BR) derart zu überlappen, dass eine Gesamterstreckung (LG) der Transporteinheiten (3A, 3B) in Bewegungsrichtung (BR) geringer ist, als eine Summe der einzelnen Transporteinheitserstreckungen (LTEi) der Transporteinheiten (3A, 3B) in Bewegungsrichtung (BR), **dadurch gekennzeichnet, dass** an zumindest einer der zumindest zwei Transporteinheiten (3A, 3B) zumindest zwei Eingriffsabschnitte (EA) vorgesehen sind, wobei die Eingriffsabschnitte (EA) an gegenüberliegenden Seiten der jeweiligen Transporteinheit (3A, 3B) angeordnet sind und dass die Transporteinheiten (3A, 3B) in der Transportebene (TE) unabhängig voneinander zumindest zweidimensional bewegbar sind.

2. Transporteinrichtung (1) nach Anspruch 1, **dadurch gekennzeichnet, dass** die Eingriffsabschnitte (EA) dazu ausgebildet sind, sich in der Eingriffsposition in einer normal auf die Transportebene (TE) stehenden Richtung (Z) zu überlappen.

3. Transporteinrichtung (1) nach Anspruch 1 oder 2, **dadurch gekennzeichnet, dass** die Eingriffsabschnitte (EA) der Transporteinheiten (3A, 3B) komplementär ausgebildet sind.

4. Transporteinrichtung (1) nach einem der Ansprüche 1 bis 3, **dadurch gekennzeichnet, dass** die zumindest zwei Eingriffsabschnitte (EA) der zumindest einen Transporteinheit gleichartig oder komplementär ausgebildet sind.

5. Transporteinrichtung (1) nach einem der Ansprüche 1 bis 4, **dadurch gekennzeichnet, dass** die zumindest zwei Transporteinheiten (3A, 3B) jeweils eine auf die Transportebene (TE) projizierte Grundfläche mit einer, die Grundfläche minimal umgebenden Rechtecksfläche aufweisen, wobei sich die minimal umgebenden Rechtecksflächen der zumindest zwei Transporteinheiten (3A, 3B) in der Eingriffsposition überschneiden.

6. Transporteinrichtung (1) nach Anspruch 5, **dadurch gekennzeichnet, dass** ein Verhältnis zwischen der minimal umgebenden Rechtecksfläche und der Grundfläche jeweils einer Transporteinheit (3A, 3B) maximal zwei beträgt, vorzugsweise maximal 1,5 **und/oder dass** ein Verhältnis zwischen der minimal umgebenden Rechtecksfläche und der Grundfläche jeweils einer Transporteinheit (3A, 3B) minimal 1,1 beträgt.

7. Transporteinheit (3A, 3B) zur Verwendung in einer Transporteinrichtung (1) nach einem der Ansprüche 1 bis 6, wobei an der Transporteinheit (3A, 3B) zumindest ein Eingriffsabschnitt (EA) vorgesehen ist, der dazu ausgebildet ist, mit einem Eingriffsabschnitt (EA) einer weiteren Transporteinheit (3A, 3B) zumindest teilweise in Eingriff zu stehen, wenn die Transporteinheit (3A, 3B) und die weitere Transporteinheit (3A, 3B) in der Transportebene (TE) in einer Bewegungsrichtung (BR) hintereinander in eine Eingriffsposition bewegt werden, wobei der Eingriffsabschnitt (EA) der Transporteinheit (3A, 3B) dazu ausgebildet ist, sich in der Eingriffsposition mit der weiteren Transporteinheit (3A, 3B) zumindest in Bewegungsrichtung (BR) mit dem Eingriffsabschnitt (EA) der weiteren Transporteinheit (3A, 3B) derart zu überlappen, dass eine Gesamterstreckung (LG) der Transporteinheiten (3A, 3B) in Bewegungsrichtung (BR) geringer ist, als eine Summe der einzelnen Transporteinheitserstreckungen (LTEi) der Transporteinheiten (3A, 3B) in Bewegungsrichtung (BR), **dadurch gekennzeichnet, dass** an der Transporteinheit (3A, 3B) zumindest zwei Eingriffsabschnitte (EA) vorgesehen sind, wobei die Eingriffsabschnitte (EA) an gegenüberliegenden Seiten der Transporteinheit (3A, 3B) angeordnet sind und dass die Transporteinheit (3A, 3B) außerhalb der Eingriffsposition unabhängig von der jeweils anderen Transporteinheit (3A, 3B) in der Transportebene (TE) der Transporteinrichtung (1) zumindest zweidimensional bewegbar ist.

8. Transporteinheit (3A, 3B) nach Anspruch 7, **dadurch gekennzeichnet, dass** die Eingriffsabschnitte (EA) dazu ausgebildet sind, sich in der Eingriffsposition mit der weiteren Transporteinheit (3A, 3B) in einer normal auf die Transportebene (TE) stehenden Richtung zu überlappen.

9. Transporteinheit (3A, 3B) nach Anspruch 7 oder 8, **dadurch gekennzeichnet, dass** die zumindest zwei Eingriffsabschnitte (EA) gleichartig oder komplementär ausgebildet sind.

10. Transporteinheit (3A, 3B) nach einem der Ansprüche 7 bis 9, **dadurch gekennzeichnet, dass** die Transporteinheit (3A, 3B) eine projizierte Grundfläche mit einer, die Grundfläche minimal umgebende Rechtecksfläche aufweist, wobei sich die minimal umgebende Rechtecksfläche der Transporteinheit (3A, 3B) in der Eingriffsposition mit einer weiteren Transporteinheit (3A, 3B) mit der minimal umgebenden Rechtecksfläche der weiteren Transporteinheit (3A, 3B) überschneidet.

11. Transporteinheit (3A, 3B) nach Anspruch 10, **dadurch gekennzeichnet, dass** ein Verhältnis zwischen der minimal umgebenden Rechtecksfläche und der Grundfläche der Transporteinheit (3A, 3B) maximal zwei beträgt, vorzugsweise maximal 1,5 und vorzugsweise minimal 1,1 beträgt.

12. Verfahren zum Betreiben einer Transporteinrichtung (1) nach einem der Ansprüche 1 bis 6, **dadurch gekennzeichnet, dass** die zumindest zwei Transporteinheiten (3A, 3B) in der Transportebene (TE) unabhängig voneinander bewegt werden und dass die Transporteinheiten (3A, 3B) in der Transportebene (TE) in einer Bewegungsrichtung (BR) so hintereinander bewegt werden, dass sie sich zumindest in der Bewegungsrichtung (BR) derart überlappen, dass eine Gesamterstreckung (LG) der Transporteinheiten (3A, 3B) in der Bewegungsrichtung (BR) geringer ist, als eine Summe der einzelnen Transporteinheitserstreckungen (LTEi) der Transporteinheiten (3A, 3B) in der Bewegungsrichtung (BR).

13. Verfahren nach Anspruch 12, **dadurch gekennzeichnet, dass** zumindest drei Transporteinheiten (3A, 3B) in der Transportebene (TE) in einer Bewegungsrichtung (BR) so hintereinander bewegt werden, dass sich jeweils zwei aufeinanderfolgende Transporteinheiten (3A, 3B) zumindest in Bewegungsrichtung (BR) derart überlappen, dass eine Gesamterstreckung (LG) der Transporteinheiten (3A, 3B) in Bewegungsrichtung (BR) geringer ist, als eine Summe der einzelnen Transporteinheitserstreckungen (LTEi) der Transporteinheiten (3A, 3B) in Bewegungsrichtung (BR), wobei mit jeder der zumindest drei Transporteinheiten (3A, 3B) ein Objekt (O) transportiert wird, wobei die Objekte (O) derart auf den Transporteinheiten (3A, 3B) positioniert werden, dass ein mittlerer Objektabstand (OAM) zwischen den Objekten (O) in Bewegungsrichtung (BR) maximal der mittleren Transporteinheitserstreckung (LTEi) der zumindest drei Transporteinheiten (3A, 3B) in Bewegungsrichtung (BR) entspricht, vorzugsweise maximal zwei Drittel der mittleren Transporteinheitserstreckung (LTEi).

14. Verfahren nach Anspruch 13, **dadurch gekennzeichnet, dass** die Transporteinheiten (3A, 3B) so relativ zueinander positioniert werden und die Objekte (O) relativ zu den Transporteinheiten (3A, 3B) so angeordnet werden, dass die Objekte (O) in Bewegungsrichtung (BR) auf einer Geraden liegen.

15. Verfahren nach Anspruch einem der Ansprüche 12 bis 14, **dadurch gekennzeichnet, dass** zumindest zwei Transporteinheiten (3A, 3B) quer zur Bewegungsrichtung (BR) zueinander versetzt bewegt werden.

**Claims**

1. Transport device (1) in the form of a planar motor comprising at least one transport segment (TSi), which forms a transport plane (TE), and comprising at least two transport units (3A, 3B), which can be moved at least in two dimensions in the transport plane (TE), wherein drive coils (6) or movable permanent magnets are arranged on the transport segment (TSi) and drive magnets (4) are arranged on the transport units (3A, 3B), or vice versa, wherein the drive coils (6) or the movable permanent magnets interact magnetically with the drive magnets (4) to move the transport units (3A, 3B), wherein at least one engagement section (EA) is provided on each of the at least two transport units (3A, 3B), wherein the at least two transport units (3A, 3B) are consecutively movable in the transport plane (TE) in a direction of movement (BR) into an engagement position, in which the engagement sections (EA) of the transport units (3A, 3B) are at least partially engaged, wherein the engagement sections (EA) are designed to overlap with one another in the engagement position at least in the direction of movement (BR), such that a total extent (LG) of the transport units (3A, 3B) in the direction of movement (BR) is smaller than a sum of the individual transport-unit extents (LTEi) of the transport units (3A, 3B) in the direction of movement (BR), **characterized in that** at least two engagement sections (EA) are provided on at least one of the at least two transport units (3A, 3B), wherein the engagement sections (EA) are arranged on opposite sides of the respective transport unit (3A, 3B), and **in that** the transport units (3A, 3B) can be moved independently of one another in at least two dimensions in the transport plane (TE).

2. Transport device (1) according to claim 1, **characterized in that** the engagement sections (EA) are designed to overlap with one another in the engagement position in a direction (Z) normal to the transport plane (TE).

3. Transport device (1) according to either claim 1 or claim 2, **characterized in that** the engagement sections (EA) of the transport units (3A, 3B) are of complementary design.

4. Transport device (1) according to any of claims 1 to 3, **characterized in that** the at least two engagement sections (EA) of the at least one transport unit are of similar or complementary design.

5. Transport device (1) according to any of claims 1 to 4, **characterized in that** the at least two transport units (3A, 3B) each have a base projected onto the transport plane (TE) with a rectangular area minimally surrounding the base, the minimally surrounding rectangular areas of the at least two transport units (3A, 3B) overlapping in the engagement position.

**6.** Transport device (1) according to claim 5, **characterized in that** a ratio between the minimally surrounding rectangular area and the base of each transport unit (3A, 3B) is a maximum of two, preferably a maximum of 1.5, **and/or in that** a ratio between the minimally surrounding rectangular area and the base of each transport unit (3A, 3B) is at least 1.1.

**7.** Transport unit (3A, 3B) for use in a transport device (1) according to any of claims 1 to 6, wherein at least one engagement section (EA) is provided on the transport unit (3A, 3B), which engagement section (EA) is designed to be at least partially engaged with an engagement section (EA) of a further transport unit (3A, 3B), when the transport unit (3A, 3B) and the further transport unit (3A, 3B) are consecutively moved in a direction of movement (BR) into an engagement position in the transport plane (TE), wherein the engagement section (EA) of the transport unit (3A, 3B) is designed to overlap with the engagement section (EA) of the further transport unit (3A, 3B) in the engagement position with the further transport unit (3A, 3B) at least in the direction of movement (BR), such that a total extent (LG) of the transport units (3A, 3B) in the direction of movement (BR) is smaller than a sum of the individual transport-unit extents (LTEi) of the transport units (3A, 3B) in the direction of movement (BR), **characterized in that** at least two engagement sections (EA) are provided on the transport unit (3A, 3B), wherein the engagement sections (EA) are arranged on opposite sides of the transport unit (3A, 3B), and **in that** the transport unit (3A, 3B), outside of the engagement position, can be moved at least in two dimensions in the transport plane (TE) of the transport device (1) independently of the other transport unit (3A, 3B).

**8.** Transport unit (3A, 3B) according to claim 7, **characterized in that** the engagement sections (EA) are designed to overlap with the further transport unit (3A, 3B) in the engagement position in a direction normal to the transport plane (TE).

**9.** Transport unit (3A, 3B) according to either claim 7 or claim 8, **characterized in that** the at least two engagement sections (EA) are of similar or complementary design.

**10.** Transport unit (3A, 3B) according to any of claims 7 to 9, **characterized in that** the transport unit (3A, 3B) has a projected base with a rectangular area minimally surrounding the base, the minimally surrounding rectangular area of the transport unit (3A, 3B) overlapping with the minimally surrounding rectangular area of a further transport unit (3A, 3B) in the engagement position with the further transport unit (3A, 3B).

**11.** Transport unit (3A, 3B) according to claim 10, **characterized in that** a ratio between the minimally surrounding rectangular area and the base of the transport unit (3A, 3B) is a maximum of two, preferably a maximum of 1.5 and preferably a minimum of 1.1.

**12.** Method for operating a transport device (1) according to any of claims 1 to 6, **characterized in that** the at least two transport units (3A, 3B) are moved in the transport plane (TE) independently of one another and **in that** the transport units (3A, 3B) are consecutively moved in the transport plane (TE) in a direction of movement (BR) in such a way that they overlap with one another at least in the direction of movement (BR), such that a total extent (LG) of the transport units (3A, 3B) in the direction of movement (BR) is smaller than a sum of the individual transport-unit extents (LTEi) of the transport units (3A, 3B) in the direction of movement (BR).

**13.** Method according to claim 12, **characterized in that** at least three transport units (3A, 3B) are consecutively moved in the transport plane (TE) in a direction of movement (BR) in such a way that two successive transport units (3A, 3B) overlap with one another at least in the direction of movement (BR), such that a total extent (LG) of the transport units (3A, 3B) in the direction of movement (BR) is smaller than a sum of the individual transport-unit extents (LTEi) of the transport units (3A, 3B) in the direction of movement (BR), wherein each of the at least three transport units (3A, 3B) transports an object (O), wherein the objects (O) are positioned on the transport units (3A, 3B), such that an average object distance (OAM) between the objects (O) in the direction of movement (BR) corresponds to at most the average transport-unit extent (LTEi) of the at least three transport units (3A, 3B) in the direction of movement (BR), preferably at most two thirds of the average transport-unit extent (LTEi).

**14.** Method according to claim 13, **characterized in that** the transport units (3A, 3B) are positioned relative to one another and the objects (O) are arranged relative to the transport units (3A, 3B) such that the objects (O) lie on a straight line in the direction of movement (BR).

**15.** Method according to claim any of claims 12 to 14, **characterized in that** at least two transport units (3A, 3B) are moved so as to be offset from one another transversely to the direction of movement (BR).

**Revendications**

1. Dispositif de transport (1) sous la forme d'un moteur planaire comportant au moins un segment de transport (TSi) qui forme un plan de transport (TE) et comportant au moins deux unités de transport (3A, 3B) qui peuvent être déplacées au moins dans deux dimensions dans le plan de transport (TE), des bobines d'entraînement (6) ou des aimants permanents mobiles étant disposés au niveau du segment de transport (TSi) et des aimants d'entraînement (4) étant disposés au niveau des unités de transport (3A, 3B), ou inversement, les bobines d'entraînement (6) ou les aimants permanents mobiles coopérant magnétiquement avec les aimants d'entraînement (4) pour déplacer les unités de transport (3A, 3B), respectivement au moins une section de mise en prise (EA) étant prévue au niveau des au moins deux unités de transport (3A, 3B), les au moins deux unités de transport (3A, 3B) pouvant être déplacées l'une derrière l'autre dans une position de mise en prise dans le plan de transport (TE) dans une direction de déplacement (BR), dans laquelle position de mise en prise les sections de mise en prise (EA) des unités de transport (3A, 3B) sont mises en prise au moins partiellement, les sections de mise en prise (EA) étant conçues pour se chevaucher dans la position de mise en prise au moins dans la direction de déplacement (BR), de telle sorte qu'une extension totale (LG) des unités de transport (3A, 3B) dans la direction de déplacement (BR) est inférieure à une somme des extensions d'unités de transport (LTEi) individuelles des unités de transport (3A, 3B) dans la direction de déplacement (BR), **caractérisé en ce que,** au niveau d'au moins l'une des au moins deux unités de transport (3A, 3B), au moins deux sections de mise en prise (EA) sont prévues, les sections de mise en prise (EA) étant disposées sur des côtés opposés de l'unité de transport (3A, 3B) respective, **et en ce que** les unités de transport (3A, 3B) peuvent être déplacées dans le plan de transport (TE) indépendamment l'une de l'autre au moins dans deux dimensions.

2. Dispositif de transport (1) selon la revendication 1, **caractérisé en ce que** les sections de mise en prise (EA) sont conçues pour se chevaucher dans la position de mise en prise dans une direction (Z) normale par rapport au plan de transport (TE).

3. Dispositif de transport (1) selon la revendication 1 ou 2, **caractérisé en ce que** les sections de mise en prise (EA) des unités de transport (3A, 3B) sont conçues de manière complémentaire.

4. Dispositif de transport (1) selon l'une des revendications 1 à 3, **caractérisé en ce que** les au moins deux sections de mise en prise (EA) de l'au moins une unité de transport sont conçues de manière identique ou complémentaire.

5. Dispositif de transport (1) selon l'une des revendications 1 à 4, **caractérisé en ce que** les au moins deux unités de transport (3A, 3B) présentent respectivement une surface de base en saillie sur le plan de transport (TE) avec une surface rectangulaire entourant au minimum la surface de base, les surfaces rectangulaires entourant au minimum des au moins deux unités de transport (3A, 3B) se recoupant dans la position de mise en prise.

6. Dispositif de transport (1) selon la revendication 5, **caractérisé en ce qu'**un rapport entre la surface rectangulaire entourant au minimum et la surface de base de respectivement une unité de transport (3A, 3B) est au maximum de deux, de préférence au maximum de 1,5, **et/ou en ce qu'**un rapport entre la surface rectangulaire entourant au minimum et la surface de base de respectivement une unité de transport (3A, 3B) est au minimum de 1,1.

7. Unité de transport (3A, 3B) destinée à être utilisée dans un dispositif de transport (1) selon l'une des revendications 1 à 6, au moins une section de mise en prise (EA) étant prévue au niveau de l'unité de transport (3A, 3B), laquelle section de mise en prise est conçue pour venir en prise au moins partiellement avec une section de mise en prise (EA) d'une autre unité de transport (3A, 3B) lorsque l'unité de transport (3A, 3B) et l'autre unité de transport (3A, 3B) sont déplacées l'une derrière l'autre dans une position de mise en prise dans le plan de transport (TE) dans une direction de déplacement (BR), la section de mise en prise (EA) de l'unité de transport (3A, 3B) étant conçue pour chevaucher la section de mise en prise (EA) de l'autre unité de transport (3A, 3B) au moins dans la direction de déplacement (BR) dans la position de mise en prise avec l'autre unité de transport (3A, 3B), de telle sorte qu'une extension totale (LG) des unités de transport (3A, 3B) dans la direction de déplacement (BR) est inférieure à une somme des extensions d'unités de transport (LTEi) individuelles des unités de transport (3A, 3B) dans la direction de déplacement (BR), **caractérisée en ce qu'**au moins deux sections de mise en prise (EA) sont prévues au niveau de l'unité de transport (3A, 3B), les sections de mise en prise (EA) étant disposées sur des côtés opposés de l'unité de transport (3A, 3B), **et en ce que** l'unité de transport (3A, 3B) peut être déplacée en dehors de la position de mise en prise indépendamment de l'autre unité de transport (3A, 3B) respective dans le plan de transport (TE) du dispositif de transport (1), au moins dans deux dimensions.

8. Unité de transport (3A, 3B) selon la revendication 7, **caractérisée en ce que** les sections de mise en prise (EA) sont conçues pour se chevaucher dans la position de mise en prise avec l'autre unité de transport (3A, 3B) dans une direction normale par rapport au plan de transport (TE).

9. Unité de transport (3A, 3B) selon la revendication 7 ou 8,
**caractérisée en ce que** les au moins deux sections de mise en prise (EA) sont conçues de manière identique ou complémentaire.

10. Unité de transport (3A, 3B) selon l'une des revendications 7 à 9,
**caractérisée en ce que** l'unité de transport (3A, 3B) présente une surface de base en saillie avec une surface rectangulaire entourant au minimum la surface de base, la surface rectangulaire entourant au minimum de l'unité de transport (3A, 3B), dans la position de mise en prise avec une autre unité de transport (3A, 3B), se recoupant avec la surface rectangulaire entourant au minimum de l'autre unité de transport (3A, 3B).

11. Unité de transport (3A, 3B) selon la revendication 10,
**caractérisée en ce qu'**un rapport entre la surface rectangulaire entourant au minimum et la surface de base de l'unité de transport (3A, 3B) est au maximum de deux, de préférence au maximum de 1,5 et de préférence au minimum de 1,1.

12. Procédé permettant de faire fonctionner un dispositif de transport (1) selon l'une des revendications 1 à 6, **caractérisé en ce que** les au moins deux unités de transport (3A, 3B) sont déplacées dans le plan de transport (TE) indépendamment l'une de l'autre **et en ce que** les unités de transport (3A, 3B) sont déplacées l'une derrière l'autre dans le plan de transport (TE) dans une direction de déplacement (BR) de telle sorte qu'elles se chevauchent au moins dans la direction de déplacement (BR), de telle sorte qu'une extension totale (LG) des unités de transport (3A, 3B) dans la direction de déplacement (BR) est inférieure à une somme des extensions d'unités de transport (LTEi) individuelles des unités de transport (3A, 3B) dans la direction de déplacement (BR).

13. Procédé selon la revendication 12, **caractérisé en ce qu'**au moins trois unités de transport (3A, 3B) sont déplacées les unes derrière les autres dans le plan de transport (TE) dans une direction de déplacement (BR) de telle sorte que respectivement deux unités de transport (3A, 3B) successives se chevauchent au moins dans la direction de déplacement (BR), de telle sorte qu'une extension totale (LG) des unités de transport (3A, 3B) dans la direction de déplacement (BR) est inférieure à une somme des extensions d'unités de transport (LTEi) individuelles des unités de transport (3A, 3B) dans la direction de déplacement (BR), un objet (O) étant transporté avec chacune des au moins trois unités de transport (3A, 3B), les objets (O) étant positionnés sur les unités de transport (3A, 3B) de telle sorte qu'une distance d'objet moyenne (OAM) entre les objets (O) dans la direction de déplacement (BR) correspond au maximum à l'extension d'unité de transport (LTEi) moyenne des au moins trois unités de transport (3A, 3B) dans la direction de déplacement (BR), de préférence au maximum aux deux tiers de l'extension d'unité de transport (LTEi) moyenne.

14. Procédé selon la revendication 13, **caractérisé en ce que** les unités de transport (3A, 3B) sont positionnées les unes par rapport aux autres et les objets (O) sont disposés par rapport aux unités de transport (3A, 3B) de telle sorte que les objets (O) se trouvent sur une ligne droite dans la direction de déplacement (BR).

15. Procédé selon la revendication l'une des revendications 12 à 14,
**caractérisé en ce qu'**au moins deux unités de transport (3A, 3B) sont déplacées de manière décalée l'une par rapport à l'autre transversalement à la direction de déplacement (BR).

Fig. 1a

Fig. 1b

Fig. 2a

Fig. 2b

Fig. 2c

Fig. 2d

Fig. 2e

Fig. 2f

Fig. 2g

Fig. 3a

Fig. 3b

Fig. 3c

Fig. 4

EP 4 115 508 B1

Fig. 5

Fig. 6

EP 4 115 508 B1

**IN DER BESCHREIBUNG AUFGEFÜHRTE DOKUMENTE**

**In der Beschreibung aufgeführte Patentdokumente**

- US 9202719 B2
- EP 3172156 B1
- EP 3172134 B1
- WO 2018176137 A1
- DE 102009002612 A1


**In der Beschreibung aufgeführte Nicht-Patentliteratur**

- Magnetically levitated planar actuator with moving magnets. **JANSEN, J. W.** electromechanical analysis and Design Eindhoven. Technische Universiteit Eindhoven, 2007